(19) Europäisches Patentamt
European Patent Office
Office européen des brevets

(11) EP 4 650 400 A1

(12) EUROPEAN PATENT APPLICATION
published in accordance with Art. 153(4) EPC

(43) Date of publication:
**19.11.2025 Bulletin 2025/47**

(21) Application number: **23916216.7**

(22) Date of filing: **15.12.2023**

(51) International Patent Classification (IPC):
***C08L 101/00*** *(2006.01)* ***C08K 3/04*** *(2006.01)*
***C08K 3/013*** *(2018.01)* ***C08K 3/34*** *(2006.01)*
***C08K 3/40*** *(2006.01)* ***C08K 5/51*** *(2006.01)*
***C08K 5/52*** *(2006.01)* ***C08K 5/521*** *(2006.01)*
***C08K 7/06*** *(2006.01)* ***C08K 7/14*** *(2006.01)*
***C08L 55/02*** *(2006.01)* ***C08L 67/00*** *(2006.01)*
***C08L 69/00*** *(2006.01)*

(52) Cooperative Patent Classification (CPC):
**C08K 3/013; C08K 3/04; C08K 3/34; C08K 3/40; C08K 5/51; C08K 5/52; C08K 5/521; C08K 7/06; C08K 7/14; C08L 55/02; C08L 67/00; C08L 69/00; C08L 101/00**

(86) International application number:
**PCT/JP2023/045001**

(87) International publication number:
**WO 2024/150602 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.01.2023 JP 2023003770**
**27.01.2023 JP 2023010747**
**03.02.2023 JP 2023015349**

(71) Applicant: **Teijin Limited**
**Osaka-shi, Osaka 530-0005 (JP)**

(72) Inventors:
- **ONIZAWA, Tomomitsu**
**Osaka-shi, Osaka 530-0005 (JP)**
- **MORI, Yoshiaki**
**Osaka-shi, Osaka 530-0005 (JP)**
- **MITSUNAGA, Masaki**
**Osaka-shi, Osaka 530-0005 (JP)**

(74) Representative: **Kraus & Lederer PartGmbB**
**Thomas-Wimmer-Ring 15**
**80539 München (DE)**

# (54) THERMOPLASTIC RESIN COMPOSITION AND MOLDED ARTICLE FORMED OF SAME

(57) The present invention provides: a thermoplastic resin composition which undergoes little discoloration or strength reduction even under harsh processing conditions, and exhibits excellent recyclability; and a molded article which is formed of this thermoplastic resin composition. A composition according to the present invention contains (B) a phosphate metal salt having an acid value of 10-55 mgKOH/g (component B) in an amount of 0.001-1 part by weight relative to 100 parts by weight of (A) a thermoplastic resin (component A). This composition additionally contains, relative to 100 parts by weight of component A, 1-150 parts by weight of (C) an inorganic filler (component C) and/or 0.01-25 parts by weight of (D) a flame retardant (component D).

EP 4 650 400 A1

## Description

TECHNICAL FIELD

The present invention relates to a thermoplastic resin composition which is less susceptible to discoloration and strength reduction during molding, and a molded article composed of the same. More specifically, the present invention relates to a thermoplastic resin composition which is less susceptible to discoloration and strength reduction even under severe molding conditions, and also has excellent recyclability, and a molded article composed of the same.

BACKGROUND ART

Thermoplastic resin compositions are used in a wide range of fields, including housings and parts for electrical, electronic and office automation equipment, interior and exterior parts for automobiles, furniture, musical instruments and miscellaneous goods. In particular, in recent years, there has been a demand for high recyclability of thermoplastic resin compositions in order to create a sustainable society. Meanwhile, it is widely known to use phosphorus-based compounds as heat stabilizers in thermoplastic resin compositions. PTL 1 discloses the use of a specific phosphorus-based compound in a resin composed of a polycarbonate-based resin and a polyester resin. PTL 2 discloses the use of a phosphorus-based compound in combination. However, the thermal stability during molding is still insufficient with existing methods. In particular, in applications requiring thin and lightweight materials, molding conditions tend to be high temperatures, and there are an increasing number of cases where the thermal stability is insufficient. There is also a strong demand for products to be recycled and reused, and there is an increasing need to propose materials capable of satisfying the demand for thermoplastic resin compositions which cause neither discoloration nor strength reduction even under severe molding conditions, and also have excellent recyclability.

[CITATION LIST]

[PATENT LITERATURE]

[PTL 1] JP 4983427 B2

SUMMARY

[TECHNICAL PROBLEM]

An object of the present invention is to provide a thermoplastic resin composition which is less susceptible to discoloration and strength reduction even under severe molding conditions, and also has excellent recyclability, and a molded article composed of the same.

[SOLUTION TO PROBLEM]

The present inventors have intensively studied in order to achieve the above object, and found that by mixing a thermoplastic resin composition with a phosphate metal salt having a specific acid value, it is possible to provide a thermoplastic resin composition which is less susceptible to discoloration and strength reduction even under severe molding conditions, and also has excellent recyclability, and a molded article composed of the same, thus arriving at the present invention. In another embodiment, it has been found that it is possible to provide a thermoplastic resin composition in which discoloration and strength reduction are prevented and also the rigidity is enhanced, or the flame retardancy is enhanced by adding an inorganic filler and/or a flame retardant, in addition to a phosphate metal salt having a specific acid value, and a molded article composed of the same.

That is, the present invention is as follows.

1. A thermoplastic resin composition comprising,

   100 parts by weight of (A) a thermoplastic resin (component A), and
   0.001 to 1 part by weight of (B) a phosphate metal salt having an acid value of 10 to 55 mgKOH/g (component B).

2. The thermoplastic resin composition according to item 1, comprising 1 to 150 parts by weight of (C) an inorganic filler (component C), based on 100 parts by weight of the component A.
3. The thermoplastic resin composition according to item 1 or 2, comprising 0.01 to 25 parts by weight of (D) a flame

retardant (component D), based on 100 parts by weight of the component A.

4. The thermoplastic resin composition according to any one of items 1 to 3, comprising 0.05 to 3 parts by weight of (E) an anti-drip agent (component E), based on 100 parts by weight of the component A.

5. The thermoplastic resin composition according to any one of items 1 to 4, wherein the component A is at least one thermoplastic resin selected from the group consisting of

(A-1) a polycarbonate resin (component A-1),
(A-2) an ABS resin (component A-2),
(A-3) a polyester resin (component A-3),
(A-4) an AS resin (component A-4),
(A-5) a PS resin (component A-5), and
(A-6) an AAS resin (component A-6).

6. The thermoplastic resin composition according to any one of items 1 to 5, wherein the component A is at least one thermoplastic resin selected from the group consisting of

(A-1) a polycarbonate resin (component A-1),
(A-2) an ABS resin (component A-2), and
(A-3) a polyester resin (component A-3).

7. The thermoplastic resin composition according to any one of items 1 to 6, wherein the content of the component A-1 is 40 to 100 parts by weight based on 100 parts by weight of the component A.

8. The thermoplastic resin composition according to any one of items 1 to 7, wherein the component B is zinc stearyl phosphate.

9. The thermoplastic resin composition according to item 2, wherein the component C is at least one inorganic filler selected from the group consisting of

(C-1) a glass fiber (component C-1),
(C-2) a plate-like glass filler (component C-2),
(C-3) a fibrous carbon filler (component C-3),
(C-4) a non-fibrous carbon filler (component C-4), and
(C-5) a silicate mineral (component C-5).

10. The thermoplastic resin composition according to item 3, wherein the component D is at least one flame retardant selected from the group consisting of

(D-1) a halogenated carbonate compound (component D-1),
(D-2) a phosphate ester-based compound (component D-2),
(D-3) a phosphazene compound (component D-3),
(D-4) a sulfonic acid metal salt (component D-4), and
(D-5) a silicone compound (component D-5).

11. A molded article comprising the thermoplastic resin composition according to any one of items 1 to 10.

[ADVANTAGEOUS EFFECTS OF INVENTION]

The thermoplastic resin composition of the present invention is a thermoplastic resin composition which is less susceptible to discoloration and strength reduction even under severe molding conditions, and also has excellent recyclability, and is therefore useful in applications requiring thin and lightweight products under high-temperature molding conditions and in the case of recycling and reusing products, and the industrial effects thereof are extremely large.

DESCRIPTION OF EMBODIMENTS

The present invention will be described in detail below.

<Component A: Thermoplastic Resin>

The thermoplastic resin used as the component A of the present invention is a polycarbonate resin, an ABS resin,

a polyester resin, an AS resin, a PS resin, an AAS resin, an AES resin, a polyamide resin, a polyolefin resin, a fluorine-based resin, a PPS resin, a PEEK resin, a polyarylate resin, a polyacetal resin or the like, and is preferably at least one thermoplastic resin selected from the group consisting of a polycarbonate resin, an ABS resin, a polyester resin, an AS resin, an PS resin, and an AAS resin. Further, it is more preferable that the component A is at least one thermoplastic resin selected from the group consisting of a polycarbonate resin, an ABS resin, and a polyester resin, and the content of the polycarbonate resin is more preferably 40 to 100 parts by weight based on 100 parts by weight of the component A. The content of the polycarbonate resin is still more preferably 60 to 100 parts by weight based on 100 parts by weight of the component A.

<Component A-1: Polycarbonate Resin>

The polycarbonate resin used as the component A-1 of the present invention is obtained by reacting a dihydric phenol with a carbonate precursor. Examples of the reaction method include an interfacial polymerization method, a melt transesterification method, a solid phase transesterification method of a carbonate prepolymer, and a ring-opening polymerization method of a cyclic carbonate compound.

Typical examples of the dihydric phenol used here include hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene and 9,9-bis(4-hydroxy-3-methylphenyl)fluorene. Preferred dihydric phenol is bis(4-hydroxyphenyl)alkane. Of these, bisphenol A is particularly preferable in view of the impact resistance, and is widely used.

In the present invention, it is possible to use, as the component A-1, a special polycarbonate resin produced by using other dihydric phenols, in addition to a bisphenol Abased polycarbonate resin which is a widely-used polycarbonate resin. For example, a polycarbonate resin (a homopolymer or a copolymer) using, as a part or all of the dihydric phenol component, 4,4'-(m-phenylenediisopropylidene)diphenol (hereinafter sometimes abbreviated as "BPM"), 1,1-bis(4-hydroxyphenyl)cyclohexane, 1,1-bis(4-hydroxyphenyl)-3,3,5-trimethylcyclohexane (hereinafter sometimes abbreviated as "Bis-TMC"), 9,9-bis(4-hydroxyphenyl)fluorene and 9,9-bis(4-hydroxy-3-methylphenyl)fluorene (hereinafter sometimes abbreviated as "BCF") is suitable for applications with particularly stringent requirements for dimensional change due to water absorption and morphological stability. It is preferable to use these dihydric phenols other than BPA in an amount of 5 mol% or more, and particularly 10 mol% or more, of the total dihydric phenol components constituting the polycarbonate resin. In particular, when high rigidity and more satisfactory hydrolysis resistance are required, it is particularly preferable that the component A constituting the resin composition is the following copolymer polycarbonate resins (1) to (3).

(1) Copolymer polycarbonate resin in which the content of BPM is 20 to 80 mol% (more preferably 40 to 75 mol%, and still more preferably 45 to 65 mol%) and the content of BCF is 20 to 80 mol% (more preferably 25 to 60 mol%, and still more preferably 35 to 55 mol%) based on 100 mol% of the dihydric phenol component constituting the polycarbonate resin.

(2) Copolymer polycarbonate resin in which the content of BPM is 10 to 95 mol% (more preferably 50 to 90 mol%, and still more preferably 60 to 85 mol%) and the content of BCF is 5 to 90 mol% (more preferably 10 to 50 mol%, and still more preferably 15 to 40 mol%) based on 100 mol% of the dihydric phenol component constituting the polycarbonate resin.

(3) Copolymer polycarbonate resin in which the content of BPM is 20 to 80 mol% (more preferably 40 to 75 mol%, and still more preferably 45 to 65 mol%) and the content of Bis-TMC is 20 to 80 mol% (more preferably 25 to 60 mol%, and still more preferably 35 to 55 mol%) based on 100 mol% of the dihydric phenol component constituting the polycarbonate resin.

These special polycarbonate resins may be used alone, or in admixture of two or more thereof. They may also be used in admixture with a widely-used bisphenol A polycarbonate resin. The production methods and properties of these special polycarbonate resins are mentioned in detail, for example, in JP 6-172508 A, JP 8-27370 A, JP 2001-55435 A and JP 2002-117580 A.

Of various polycarbonate resins mentioned above, polycarbonates having water absorption rate and glass transition temperature (Tg) controlled within the following ranges by adjusting the copolymerization composition have satisfactory hydrolysis resistance of the polymer itself and are remarkably excellent in low warpage after molding, and are

therefore particularly suitable in the fields where the morphological stability is required.

(i) Polycarbonate resin having a water absorption rate of 0.05 to 0.15%, and preferably 0.06 to 0.13%, and Tg of 120 to 180°C, or
(ii) Polycarbonate resin having Tg of 160 to 250°C, and preferably 170 to 230°C, and a water absorption rate of 0.10 to 0.30%, preferably 0.13 to 0.30%, and still more preferably 0.14 to 0.27%.

Here, the water absorption rate of the polycarbonate resin is a value obtained by measuring the water content after immersing in water at 23°C for 24 hours in accordance with ISO62-1980 using a disk-shaped test piece having a diameter of 45 mm and a thickness of 3.0 mm. The glass transition temperature (Tg) is a value obtained by differential scanning calorimetry (DSC) measurement in accordance with JIS K7121.

As a carbonate precursor, carbonyl halide, carbonic acid diester or haloformate is used, and specific examples thereof include phosgene, diphenyl carbonate or dihaloformate of dihydric phenol.

For the production of a polycarbonate resin by interfacial polymerization of the dihydric phenol and the carbonate precursor and, if necessary, a catalyst, an end terminator, an antioxidant for preventing the dihydric phenol from being oxidized, etc. may be used. The aromatic polycarbonate resin of the present invention includes a branched polycarbonate resin obtained by copolymerizing a trifunctional or higher polyfunctional aromatic compound, a polyester carbonate resin obtained by copolymerizing an aromatic or aliphatic (including alicyclic) difunctional carboxylic acid, a copolymer polycarbonate resin obtained by copolymerizing a difunctional alcohol (including alicyclic), and a polyester carbonate resin obtained by copolymerizing both the difunctional carboxylic acid and the difunctional alcohol. It may be a mixture of two or more of the thus obtained polycarbonate resins.

The branched polycarbonate resin can impart dripping inhibiting performance to the thermoplastic resin composition of the present invention. Examples of the trifunctional or higher polyfunctional aromatic compound used in the branched polycarbonate resin include phloroglucin, phloroglucide, or trisphenol such as 4,6-dimethyl-2,4,6-tris(4-hydroxyphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol or 4-{4-[1,1-bis(4-hydroxyphenyl)ethyl]benzene}-$\alpha,\alpha$-dimethylbenzylphenol, tetra(4-hydroxyphenyl)methane, bis(2,4-dihydroxyphenyl)ketone, 1,4-bis(4,4-dihydroxytriphenylmethyl)benzene, or trimellitic acid, pyromellitic acid, benzophenonetetracarboxylic acid, and acid chlorides thereof. Of these, 1,1,1-tris(4-hydroxyphenyl)ethane, 1,1,1-tris(3,5-dimethyl-4-hydroxyphenyl)ethane is preferable, and 1,1,1-tris(4-hydroxyphenyl)ethane is particularly preferable.

The content of the constituent unit derived from the polyfunctional aromatic compound in the branched polycarbonate resin is preferably 0.01 to 1 mol%, more preferably 0.05 to 0.9 mol%, and still more preferably 0.05 to 0.8 mol%, in 100 mol% of the total amount of the constituent unit derived from the dihydric phenol and the constituent unit derived from the polyfunctional aromatic compound. Particularly in the case of the melt transesterification method, a branched structural unit may be generated as a side reaction, and the amount of the branched structural unit is preferably 0.001 to 1 mol%, more preferably 0.005 to 0.9 mol%, and still more preferably 0.01 to 0.8 mol%, in 100 mol% of the total amount with the structural unit derived from dihydric phenol. The amount of the branched structure can be calculated by $^1$H-NMR measurement.

The aliphatic difunctional carboxylic acid is preferably $\alpha,\omega$-dicarboxylic acid. Examples of the aliphatic difunctional carboxylic acid are preferably linear saturated aliphatic dicarboxylic acids such as sebacic acid (decanedioic acid), dodecanedioic acid, tetradecanedioic acid, octadecanedioic acid; and alicyclic dicarboxylic acid such as cyclohexanedicarboxylic acid. The difunctional alcohol is more preferably an alicyclic diol, and examples thereof include cyclohexanedimethanol, cyclohexanediol and tricyclodecanedimethanol.

Reaction modes such as interfacial polymerization method, melt transesterification method, carbonate prepolymer solid phase transesterification method, and ring-opening polymerization method of a cyclic carbonate compound, which are methods for producing a polycarbonate resin of the present invention, are methods well known in various literatures and patent publications.

In producing the thermoplastic resin composition of the present invention, the viscosity-average molecular weight of the polycarbonate resin is preferably 12,500 to 32,000, more preferably 16,000 to 28,000, and still more preferably 18,000 to 26,000. In the polycarbonate resin having a viscosity-average molecular weight of less than 12,500, satisfactory mechanical properties may not be obtained. Meanwhile, a resin composition obtained from a polycarbonate resin having a viscosity-average molecular weight exceeding 32,000 may have poor moldability.

The viscosity-average molecular weight in the present invention is obtained in the following manner. First, specific viscosity ($\eta_{SP}$) calculated by the following equation is determined from a solution prepared by dissolving 0.7 g of polycarbonate in 100 ml of methylene chloride at 20°C using an Ostwald viscometer:

$$\text{Specific viscosity } (\eta_{SP}) = (t - t_0)/t_0$$

where $t_0$ is the falling seconds for methylene chloride, and t is the falling seconds for the sample solution.

The viscosity-average molecular weight M is calculated from the thus obtained specific viscosity ($\eta_{SP}$) by the following equations.

$$\eta_{SP}/c = [\eta] + 0.45 \times [\eta]^2 c$$

(wherein [η] is limiting viscosity)

$$[\eta] = 1.23 \times 10^{-4} M^{0.83}$$

$$c = 0.7$$

The viscosity-average molecular weight of the polycarbonate resin in the thermoplastic resin composition of the present invention is calculated in the following manner. Namely, the composition is mixed with 20 to 30 weight times of methylene chloride to dissolve the soluble component in the composition. Such soluble component is collected by filtration through Celite. The solvent in the resulting solution is then removed. After removal of the solvent, a solid is sufficiently dried to obtain a solid of a component which dissolves in methylene chloride. From a solution prepared by dissolving 0.7 g of the solid in 100 ml of methylene chloride, the specific viscosity at 20°C is obtained in the same manner as mentioned above, and the viscosity-average molecular weight M is calculated from the specific viscosity in the same manner as mentioned above.

It is also possible to use, as the polycarbonate resin of the present invention, a polycarbonate-polydiorganosiloxane copolymer resin. The polycarbonate-polydiorganosiloxane copolymer resin is preferably a copolymer resin prepared by copolymerizing a dihydric phenol represented by the following general formula (1) with a hydroxyaryl-terminated polydiorganosiloxane represented by the following general formula (3):

[Chemical Formula 1]

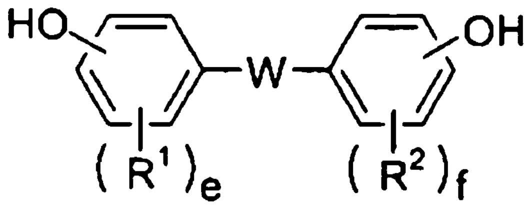

(1)

wherein, in the general formula (1), $R^1$ and $R^2$ each independently represent a group selected from the group consisting of a hydrogen atom, a halogen atom, an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group and a carboxyl group, and when there are a plurality of substituents, they are the same or different; e and f are each an integer of 1 to 4; and W is a single bond, or at least one group selected from the group consisting of groups represented by the following general formula (2):

[Chemical Formula 2]

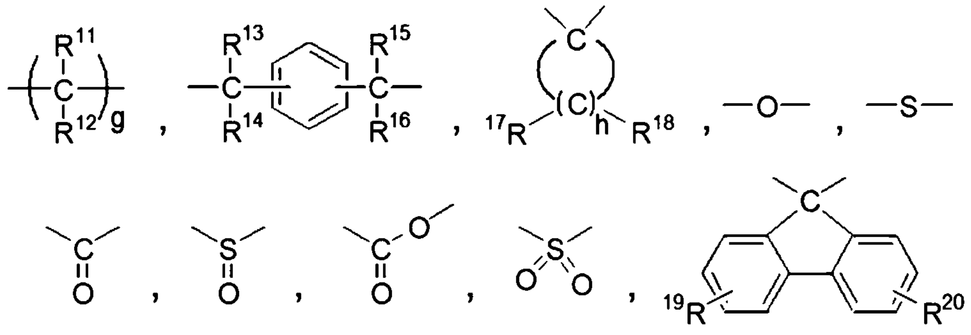

(2)

wherein, in the general formula (2), $R^{11}$, $R^{12}$, $R^{13}$, $R^{14}$, $R^{15}$, $R^{16}$, $R^{17}$ and $R^{18}$ each independently represent a group selected from the group consisting of a hydrogen atom, an alkyl group having 1 to 18 carbon atoms, an aryl group having 6 to 14 carbon atoms and an aralkyl group having 7 to 20 carbon atoms; $R^{19}$ and $R^{20}$ each independently represent a group selected from the group consisting of a hydrogen atom, a halogen atom, an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group and a carboxyl group, and when there are a plurality of substituents, they are the same or different; g is an integer of 1 to 10; and h is an integer of 4 to 7, and:

[Chemical Formula 3]

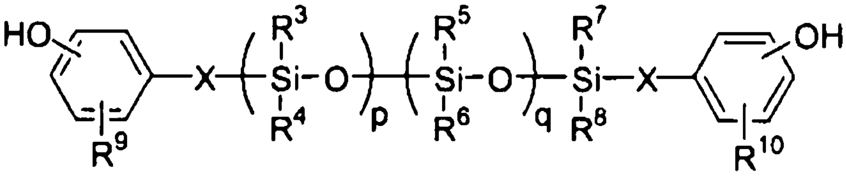

(3)

wherein, in the general formula (3), R3 , $R^4$, $R^5$, $R^6$, $R^7$ and $R^8$ are each independently a hydrogen atom, an alkyl group having 1 to 12 carbon atoms, or a substituted or unsubstituted aryl group having 6 to 12 carbon atoms; $R^9$ and $R^{10}$ each independently is a hydrogen atom, a halogen atom, an alkyl group having 1 to 10 carbon atoms or an alkoxy group having 1 to 10 carbon atoms; p is a natural number; q is 0 or a natural number; p+q is a natural number of 10 to 300; and X is a divalent aliphatic group having 2 to 8 carbon atoms.

Examples of the dihydric phenol (I) represented by the general formula (1) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl) propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, 1,3-bis(4-hydroxyphenyl)-5,7-dimethyladamantane and the like.

Of these, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, 1,4-bis{2-(4-hydroxyphenyl)propyl}benzene are preferable, and 2,2-bis(4-hydroxyphenyl)propane, 1,1-bis(4-hydroxyphenyl)cyclohexane (BPZ), 4,4'-sulfonyldiphenol and 9,9-bis(4-hydroxy-3-methylphenyl) fluorene are particularly preferable. Of these, 2,2-bis(4-hydroxyphenyl)propane having excellent strength and satisfactory durability is most preferable. These phenols may be used alone, or in combination of two or more thereof.

As the hydroxyaryl-terminated polydiorganosiloxane represented by the general formula (3), for example, compound shown below are preferably used.

[Chemical Formula 4]

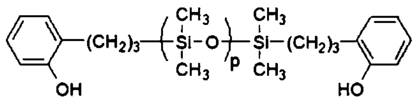

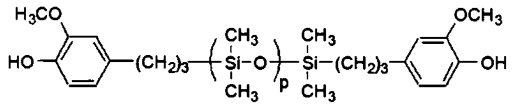

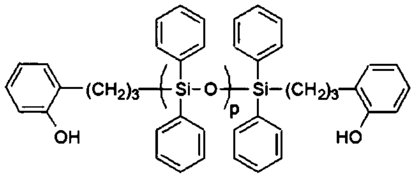

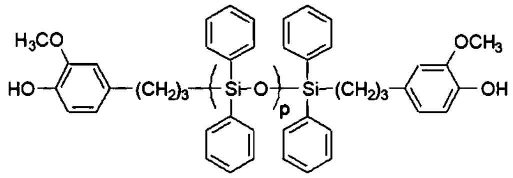

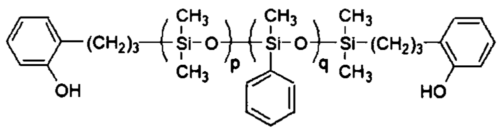

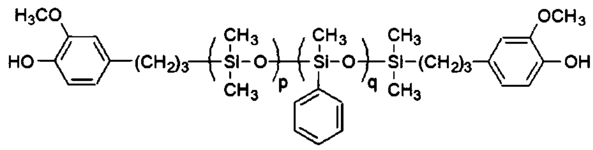

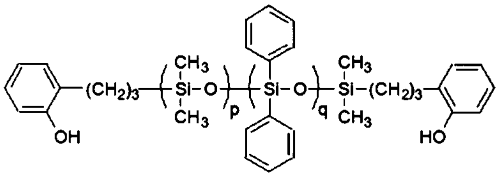

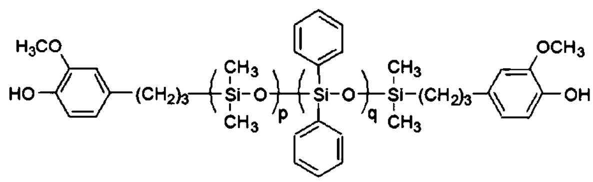

The hydroxyaryl-terminated polydiorganosiloxane (II) is easily produced by hydrosilylating a phenol having an olefinic unsaturated carbon-carbon bond, preferably vinyl phenol, 2-allylphenol, isopropenyl phenol or 2-methoxy-4-allylphenol to the end of a polysiloxane chain having a predetermined polymerization degree. Of these, (2-allylphenol)-terminated polydiorganosiloxane and (2-methoxy-4-allylphenol)-terminated polydiorganosiloxane are preferable, and (2-allylphenol)-terminated polydimethylsiloxane and (2-methoxy-4-allylphenol)-terminated polydimethylsiloxane are particularly preferable. The hydroxyaryl-terminated polydiorganosiloxane (II) preferably has a molecular-weight distribution (Mw/Mn) of 3 or less. To develop more excellent low outgassing properties during high-temperature molding and low-temperature impact resistance, the molecular-weight distribution (Mw/Mn) is more preferably 2.5 or less, and still more preferably 2 or less. If the molecular-weight distribution exceeds the upper limit of such preferable range, a large amount of outgas may be generated during high-temperature molding and the low-temperature impact resistance may be inferior.

To realize high impact resistance, the diorganosiloxane polymerization degree (p+q) of the hydroxyaryl-terminated polydiorganosiloxane (II) is appropriately 10 to 300. The diorganosiloxane polymerization degree (p+q) is preferably 10 to 200, more preferably 12 to 150, and still more preferably 14 to 100. If the diorganosiloxane polymerization degree is less than the lower limit of the above preferable range, the impact resistance which is the feature of the polycarbonate-polydiorganosiloxane copolymer is not effectively developed, and if the diorganosiloxane polymerization degree is more than the upper limit of the above preferable range, inferior appearance develops.

The content of the polydiorganosiloxane is preferably 0.1 to 50% by weight based on the total weight of the polycarbonate-polydiorganosiloxane copolymer resin used as the component A-1. The content of the polydiorganosiloxane component is more preferably 0.5 to 30% by weight, and still more preferably 1 to 20% by weight. If the content thereof is more than the lower limit of the above preferable range, the impact resistance and flame retardancy become excellent, and if the content thereof is less than the upper limit of the above preferable range, stable appearance which is hardly affected by molding conditions is easily obtained. The polymerization degree of the polydiorganosiloxane and the content of the polydiorganosiloxane can be calculated by $^{1}$H-NMR measurement.

In the present invention, hydroxyaryl-terminated polydiorganosiloxanes (II) may be used alone, or in combination of two or more thereof.

As long as the present invention is not impeded, a comonomer other than the dihydric phenol (I) and the hydroxyaryl-terminated polydiorganosiloxane (II) can be used in combination in an amount of 10% by weight or less based on the total weight of the copolymer.

In the present invention, a mixed solution containing an oligomer having a terminal chloroformate group is

prepared in advance by a reaction between the dihydric phenol (I) and a carbonate ester-forming compound in a mixed solution of a water-insoluble organic solvent and an aqueous alkali solution.

To produce the oligomer of the dihydric phenol (I), the whole amount of the dihydric phenol (I) in use may be changed to the oligomer at a time, or part thereof as a post-addition monomer may be added as a reaction raw material in a post-stage of an interfacial polycondensation reaction. The term "post-addition monomer" means that a monomer is added to accelerate the post-stage of the polycondensation reaction and does not need to be added when not required.

This oligomer production reaction system is not particularly limited, but is preferably a system in which the reaction is performed in a solvent in the presence of an acid binder.

The amount of the carbonate ester-forming compound may be appropriately adjusted in consideration of the stoichiometric ratio (equivalent) of the reaction. When a gaseous carbonate ester-forming compound such as phosgene is used, it is preferably blown into the reaction system.

It is possible to use, as the acid binder, alkali metal hydroxides such as sodium hydroxide and potassium hydroxide, alkali metal carbonates such as sodium carbonate and potassium carbonate, organic bases such as pyridine, or a mixture thereof. The amount of the acid binder may be appropriately determined in consideration of the stoichiometric ratio (equivalent) of the reaction likewise. More specifically, 2 equivalents or a little more than that of the acid binder is preferably used based on the number of mols (1 mol is usually equivalent to 2 equivalents) of the dihydric phenol (I) used for the formation of the oligomer.

As the solvent, solvents which are inactive to reactions such as known solvents used to produce polycarbonates may be used alone or as a mixture. Typical examples of the solvent include hydrocarbon solvents such as xylene and halogenated hydrocarbon solvents such as methylene chloride and chlorobenzene. Halogenated hydrocarbon solvents such as methylene chloride are particularly preferably used.

Although the reaction pressure for producing the oligomer is not particularly limited and may be normal pressure, increased pressure or reduced pressure, the reaction is advantageously performed under normal pressure. The reaction temperature is selected from a range of -20 to 50°C, and water cooling or ice cooling is desirably performed as heat is generated by polymerization in most cases. Although the reaction time is affected by other conditions and cannot be specified unconditionally, it is generally 0.2 to 10 hours. The pH range of the oligomer production reaction is the same as that of a known interfacial reaction and always adjusted to 10 or more.

Thus, the polycarbonate-polydiorganosiloxane copolymer is obtained by obtaining a mixed solution containing the oligomer of the dihydric phenol (I) having a terminal chloroformate group, adding the highly purified hydroxyaryl-terminated polydiorganosiloxane (II) represented by the general formula (3) having a molecular-weight distribution (Mw/Mn) of 3 or less while stirring the mixed solution, and performing the interfacial polycondensation of the hydroxyaryl-terminated polydiorganosiloxane (II) and the oligomer:

[Chemical Formula 5]

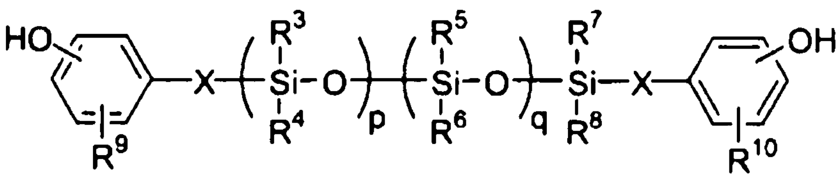

(3)

wherein, in the general formula (3), $R^3$, $R^4$, $R^5$, $R^6$, $R^7$ and $R^8$ are each independently a hydrogen atom, an alkyl group having 1 to 12 carbon atoms, or a substituted or unsubstituted aryl group having 6 to 12 carbon atoms; $R^9$ and $R^{10}$ are each independently a hydrogen atom, a halogen atom, an alkyl group having 1 to 10 carbon atoms or an alkoxy group having 1 to 10 carbon atoms; p is a natural number, q is 0 or a natural number, and p+q is a natural number of 10 to 300; and X is a divalent aliphatic group having 2 to 8 carbon atoms.

For the interfacial polycondensation reaction, an acid binder may be appropriately added in consideration of the stoichiometric ratio (equivalent) of the reaction. It is possible to use, as the acid binder, for example, alkali metal hydroxides such as sodium hydroxide and potassium hydroxide, alkali metal carbonates such as sodium carbonate and potassium carbonate, organic bases such as pyridine, or a mixture thereof. More specifically, when the hydroxyaryl-terminated polydiorganosiloxane (II) in use or part of the dihydric phenol (I) as a post-addition monomer is added in this reaction stage, 2 equivalents or more than that of an alkali is preferably used based on the total number of moles (1 mol is usually equivalent to 2 equivalents) of the post-addition dihydric phenol (I) and the hydroxyaryl-terminated polydiorganosiloxane (II).

Polycondensation by an interfacial polycondensation reaction between the oligomer of the dihydric phenol (I) and the hydroxyaryl-terminated polydiorganosiloxane (II) is performed by vigorously stirring the above mixed solution.

In the polymerization reaction, an end terminator or a molecular weight control agent is generally used. Examples

of the end terminator include compounds having a monovalent phenolic hydroxyl group such as ordinary phenol, p-tert-butylphenol, p-cumylphenol and tribromophenol, long-chain alkyl phenols, aliphatic carboxylic acid chlorides, aliphatic carboxylic acids, hydroxybenzoic acid alkyl esters, hydroxyphenyl alkyl acid esters and alkyl ether phenols. The amount of the end terminator is 100 to 0.5 mol, and preferably 50 to 2 mols, based on 100 mols of the total amount of all the dihydric phenol-based compounds. Two or more of the above compounds may be used in combination as a matter of course.

To promote the polycondensation reaction, catalysts, for example, a tertiary amine such as triethylamine or a quaternary ammonium salt may be added.

The reaction time of the polymerization reaction is preferably 30 minutes or more, and more preferably 50 minutes or more. A small amount of an antioxidant such as sodium sulfide or hydrosulfide may be added as desired.

A branching agent may be used in combination with the above dihydric phenol-based compound to obtain a branched polycarbonate-polydiorganosiloxane. Examples of the trifunctional or higher polyfunctional aromatic compound used for the branched polycarbonate-polydiorganosiloxane copolymer resin include phloroglucin, phloroglucide, or trisphenol such as 4,6-dimethyl-2,4,6-tris(4-hydroxyphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol or 4-{4-[1,1-bis(4-hydroxyphenyl)ethyl]benzene}-$\alpha$,$\alpha$-dimethylbenzylphenol, tetra(4-hydroxyphenyl)methane, bis(2,4-dihydroxyphenyl)ketone, 1,4-bis(4,4-dihydroxytriphenylmethyl)benzene, or trimellitic acid, pyromellitic acid, benzophenonetetracarboxylic acid, and acid chlorides thereof. Of these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable. The amount of the polyfunctional compound in the branched polycarbonate-polydiorganosiloxane copolymer resin is preferably 0.001 to 1 mol%, more preferably 0.005 to 0.9 mol%, still more preferably 0.01 to 0.8 mol%, and particularly preferably 0.05 to 0.4 mol%, based on the whole amount of the polycarbonate-polydiorganosiloxane copolymer resin. The amount of the branched structure can be calculated by $^1$H-NMR measurement.

The reaction pressure may be reduced pressure, normal pressure or increased pressure, but preferably normal pressure or the pressure of reaction system itself. The reaction temperature is selected from a range of -20 to 50°C, and water cooling or ice cooling is desirably performed as heat is generated by polymerization in most cases. Since the reaction time differs according to other conditions such as the reaction temperature, it cannot be specified unconditionally, but it is usually 0.5 to 10 hours.

According to circumstances, a polycarbonate-polydiorganosiloxane copolymer resin having a desired reduced viscosity [$\eta$SP/c] can be acquired by appropriately subjecting the thus obtained polycarbonate-polydiorganosiloxane copolymer resin to a physical treatment (mixing, fractionation) and/or a chemical treatment (polymer reaction, crosslinking treatment, partial decomposition treatment).

The thus obtained reaction product (crude product) is subjected to a known post-treatment such as separation and purification to collect a polycarbonate-polydiorganosiloxane copolymer resin having a desired purity (degree of purification).

The average size of polydiorganosiloxane domains in a molded article of the polycarbonate-polydiorganosiloxane copolymer resin is preferably 1 to 40 nm. The average size is more preferably 1 to 30 nm, and still more preferably 5 to 25 nm. If the average size is less than the lower limit of the preferable range, the impact resistance and flame retardancy may not be fully developed, and if the average size is more than the upper limit of the preferable range, the impact resistance may not be developed stably.

The average domain size and normalized dispersity of the polydiorganosiloxane domains of a molded article of the polycarbonate-polydiorganosiloxane copolymer resin in the present invention were evaluated by a small angle X-ray scattering (SAXS) method. The small-angle X-ray scattering method is a method for measuring diffuse scattering and diffraction produced in a small-angle area having a scattering angle (2θ) of less than 10°. In this small angle X-ray scattering method, when there are areas having a size of about 1 to 100 nm and a difference in electron density in a substance, the diffuse scattering of X-rays is measured due to the electron density difference. The particle diameter of an object to be measured is obtained based on this scattering angle and scattering intensity. In the case of a polycarbonate-polydiorganosiloxane copolymer resin having an aggregation structure in which polydiorganosiloxane domains are dispersed in the matrix of a polycarbonate polymer, the diffuse scattering of X-rays occurs due to a difference in electron density between the polycarbonate matrix and the polydiorganosiloxane domains. A small-angle X-ray scattering profile is measured by measuring scattering intensity I at each scattering angle (2θ) of less than 10°, and simulation is performed by using commercially available analyzing software from temporary particle diameter and temporary particle size distribution models based on the assumption that the polydiorganosiloxane domains are spherical domains and there are variations in particle size distribution to obtain the average size and particle size distribution (normalized dispersity) of the polydiorganosiloxane domains. According to the small-angle X-ray scattering method, the average size and particle size distribution of the polydiorganosiloxane domains dispersed in the matrix of the polycarbonate polymer, which cannot be accurately measured by observation through a transmission electron microscope, can be measured easily and accurately with high reproducibility. The term "average domain size" means the number average of individual domain sizes. The term

"normalized dispersity" means a parameter obtained by normalizing the spread of a particle size distribution with the average size. Specifically, it is a value obtained by normalizing the dispersity of polydiorganosiloxane domain sizes with the average domain size and represented by the following equation (1).
[Equation 1]

$$\text{Normalized dispersity (\%)} = \delta/D_{av} \qquad (1)$$

In the above equation (1), $\delta$ is the standard deviation of polydiorganosiloxane domain size, and $D_{av}$ is an average domain size.
The terms "average domain size" and "normalized dispersity" as used in association with the present invention are measurement values obtained by measuring a 1.0 mm-thick part of a three-stage plate manufactured by the method mentioned in Examples by the small-angle X-ray scattering method. Analysis was performed with an isolated particle model which does not take interaction between particles (interference between particles) into consideration.

<Component A-2: ABS Resin>

The ABS resin used as the component A-2 in the present invention is a copolymer in which acrylonitrile and styrene are graft-polymerized on polybutadiene. It is possible to use, as the styrene, styrene and $\alpha$-methylstyrene, particularly preferably. The proportion of the component to be grafted to the polybutadiene is preferably 95 to 20% by weight, and particularly preferably 90 to 50% by weight, based on 100% by weight of the ABS resin component. Further, it is preferable that the amount of acrylonitrile is 5 to 50% by weight and the amount of styrene is 95 to 50% by weight, based on 100% by weight of the total amount of acrylonitrile and styrene. Further, methyl (meth)acrylate, ethyl acrylate, maleic anhydride, N-substituted maleimide, etc. may be mixed and used as part of the above-mentioned components to be graft-polymerized on the polybutadiene, and the content of these is preferably 15% by weight or less in the ABS resin component. It is also possible to use, as the initiator, chain transfer agent, emulsifier and the like used in the reaction, various known agents may be used as necessary. In the ABS resin of the present invention, the particle size of the polybutadiene is preferably 0.1 to 5.0 $\mu$m, more preferably 0.2 to 3.0 $\mu$m, and particularly preferably 0.3 to 1.5 $\mu$m. The particle size distribution of such polybutadiene may be either a single distribution or a distribution having two or more peaks. Further, the morphology may be such that the particles form a single phase or that the particles have a salami structure by containing an occluded phase around them. It has conventionally been well known that the ABS resin contains a copolymer of acrylonitrile and styrene that is not grafted to a diene rubber component, and the ABS resin of the present invention may also contain a free polymer component generated during such polymerization. The reduced viscosity (at 30°C) of such a copolymer of free acrylonitrile and styrene is preferably 0.2 to 1.0 dl/g, and more preferably 0.3 to 0.7 dl/g. The ratio of the grafted acrylonitrile and styrene to the polybutadiene is preferably 20 to 200%, and more preferably 20 to 70%, in terms of graft ratio (% by weight). Such ABS resin may be produced by any of bulk polymerization, suspension polymerization and emulsion polymerization methods, and those produced by the bulk polymerization are particularly preferable. In the case of the bulk polymerization, since the resin composition is substantially free of alkali metal salts derived from emulsifiers, etc., it is possible to maintain the thermal stability of the resin composition more satisfactorily. The copolymerization method may be either one-stage or multi-stage. It is also possible to preferably use a mixed of the ABS resin which is obtained by the above-mentioned production method with a vinyl compound polymer obtained by separately copolymerizing acrylonitrile and styrene.

<Component A-3: Polyester Resin>

The polyester resin used as the component A-3 of the present invention is preferably a polyester resin in which, of the dicarboxylic acid components and diol components that form the polyester, 70 mol% or more, more preferably 90 mol% or more, and most preferably 99 mol% or more, of 100 mol% of the dicarboxylic acid components are aromatic dicarboxylic acids.
Examples of the dicarboxylic acid include terephthalic acid, isophthalic acid, 2-chloroterephthalic acid, 2,5-dichloroterephthalic acid, 2-methylterephthalic acid, 4,4-stilbene dicarboxylic acid, 4,4-biphenyl dicarboxylic acid, orthophthalic acid, 2,6-naphthalene dicarboxylic acid, 2,7-naphthalene dicarboxylic acid, bisbenzoic acid, bis(p-carboxyphenyl)methane, anthracenedicarboxylic acid, 4,4-diphenyl ether dicarboxylic acid, 4,4-diphenoxyethane dicarboxylic acid, 5-Na sulfoisophthalic acid, ethylene-bis-p-benzoic acid and the like. These dicarboxylic acids can be used alone, or in combination of two or more thereof. In the polyester resin of the present invention, in addition to the above aromatic dicarboxylic acid, less than 30 mol% of an aliphatic dicarboxylic acid component can be copolymerized. Specific examples thereof include adipic acid, sebacic acid, azelaic acid, dodecanedioic acid, 1,3-cyclohexanedicarboxylic acid, 1,4-cyclohexanedicarboxylic acid and the like.

Examples of the diol component of the present invention include ethylene glycol, diethylene glycol, 1,2-propylene glycol, 1,3-propanediol, 2,2-dimethyl-1,3-propanediol, trans- or cis-2,2,4,4-tetramethyl-1,3-cyclobutanediol, 1,4-butanediol, neopentyl glycol, 1,5-pentanediol, 1,6-hexanediol, 1,4-cyclohexanedimethanol, 1,3-cyclohexanedimethanol, decamethylene glycol, cyclohexanediol, p-xylenediol, bisphenol A, tetrabromobisphenol A, tetrabromobisphenol A-bis(2-hydroxyethyl ether) and the like. These may be used alone, or in admixture of two or more thereof. The diol component preferably contains a dihydric phenol in an amount of 30 mol% or less.

Examples of specific polyester resin include, in addition to polyethylene terephthalate (PET), polypropylene terephthalate, polybutylene terephthalate (PBT), polyhexylene terephthalate, polyethylene naphthalate (PEN), polybutylene naphthalate (PBN), polyethylene-1,2-bis (phenoxy)ethane-4,4'-dicarboxylate and the like, copolymer polyester resins such as polyethylene isophthalate/terephthalate copolymers and polybutylene terephthalate/isophthalate copolymers.

Further, the terminal group structure of the polyester resin used in the present invention is not particularly limited, and the ratios of terminal hydroxyl and carboxyl groups may be almost the same and, additionally, one of the terminal hydroxyl groups and the carboxyl groups may have larger percentage than the other. Further, the terminal group may be sealed by reacting a compound which can react with the terminal group.

The polyester resin used in the present invention is produced according to a conventional method, by polymerizing a dicarboxylic acid component and a diol component while heating in the presence of a polycondensation catalyst containing titanium, germanium, antimony or the like, and discharging the by-produced water or lower alcohol from the system. For example, germanium-based polymerization catalysts include germanium oxides, hydroxides, halides, alcoholates, and phenolates, and more specifically, germanium oxide, germanium hydroxide, germanium tetrachloride, tetramethoxygermanium and the like. In the present invention, it is also possible to use in combination with compounds of manganese, zinc, calcium, magnesium and the like, which are used in the transesterification reaction, that is a step preceding the conventional polycondensation, and it is also possible to deactivate such catalysts with a phosphoric acid or phosphorous acid compound or the like after completion of the transesterification reaction, followed by polycondensation. Further, the polyester resin may be produced by either a batch method or a continuous polymerization method.

Of the above polyester resins, polyethylene terephthalate is particularly suitable. The polyethylene terephthalate of the present invention is a polymer obtained by a polycondensation reaction of terephthalic acid or a derivative thereof and 1,4-ethanediol or a derivative thereof, and also includes those copolymerized with other dicarboxylic acid components and other alkylene glycol components, as mentioned above.

The terminal group structure of the polyethylene terephthalate is not particularly limited as mentioned above, but more preferably the number of terminal carboxyl groups is less than the number of terminal hydroxyl groups. As for the production method, various methods mentioned above can be used, but the continuous polymerization method is preferable. This is because it has high quality stability and is also advantageous in terms of cost. Further, it is preferable to use an organic titanium compound as the polymerization catalyst. This is because it tends to have less effect on transesterification reactions, etc. Preferred specific examples of such organic titanium compound include titanium tetrabutoxide, titanium isopropoxide, titanium oxalate, titanium acetate, titanium benzoate, titanium trimellitate, a reaction product of tetrabutyl titanate and trimellitic anhydride and the like. The amount of the organic titanium compound used is preferably such that the titanium atoms account for 3 to 12 mg atom% based on the acid component constituting the polyethylene terephthalate.

The molecular weight of the polyester resin of the present invention is not particularly limited, but the intrinsic viscosity measured at 35°C using o-chlorophenol as a solvent is preferably 0.5 to 1.5, and particularly preferably 0.6 to 1.2.

<Component A-4: AS Resin>

The AS resin used as the component A-4 of the present invention is a copolymer of acrylonitrile and styrene. The AS resin may have high stereoregularity, such as syndiotactic polystyrene, by using a catalyst such as a metallocene catalyst during its production. Further, in some cases, it is also possible to use polymers and copolymers having narrow molecular weight distribution, block copolymers, and polymers and copolymers having high stereoregularity, which are obtained by methods such as anionic living polymerization and radical living polymerization.

<Component A-5: PS Resin>

The PS resin used as the component A-5 in the present invention is a styrene polymer.

<Component A-6: AAS Resin>

The AAS resin used as the component A-6 in the present invention is a copolymer composed of acrylonitrile, styrene and acrylic rubber components.

<Component B: Phosphate Metal Salt>

The phosphate metal salt used in the present invention can be produced by a dry method in which a fatty acid is directly reacted with a metal oxide or a fatty acid with a metal hydroxide, or can be produced by a wet method in which a sodium salt of a fatty acid is reacted with a metal salt in an aqueous solution. Various combinations of fatty acid having 1 to 22 carbon atoms can be used, but those having 18 carbon atoms are more preferable. Most preferably, the metal phosphate salt is zinc stearyl phosphate. The acid value of the phosphate metal salt is 10 to 55 mgKOH/g, preferably 10 to 53 mgKOH/g, and more preferably 30 to 53 mgKOH/g. The acid value of less than 10 mgKOH/g is not practical for production, and the acid value of more than 55 mgKOH/g cannot prevent discoloration and strength reduction during molding. The acid value was measured using an indicator titration method, and a 2-ethylhexanol solution of a phosphate metal salt was titrated with a KOH alcohol solution at 60°C. Phenolphthalein was used as the indicator.

The content of the component B is 0.001 to 1 part by weight, preferably 0.01 to 0.1 part by weight, and more preferably 0.01 to 0.07 part by weight, based on 100 parts by weight of the component A. When the content of the component B is less than 0.001 part by weight or exceeds 1 part by weight, discoloration and strength reduction during molding cannot be prevented.

<Other Components>

The thermoplastic resin composition of the present invention can be mixed with an inorganic filler (component C), a flame retardant (component D), an anti-drip agent (component E), and other additives shown below, as long as the object of the present invention is not impaired.

<Component C: Inorganic Filler>

The inorganic filler as the component C can be any conventionally known inorganic filler, but it is preferable to use at least one inorganic filler selected from the group consisting of (C-1) a glass fiber (component C-1), (C-2) a plate-like glass filler (component C-2), (C-3) a fibrous carbon filler (component C-3), (C-4) a non-fibrous carbon filler (component C-4), and (C-5) a silicate mineral (component C-5).

The content of the component C is preferably 1 to 150 parts by weight, more preferably 3 to 140 parts by weight, and still more preferably 5 to 130 parts by weight, based on 100 parts by weight of the component A. If the content of the component C is less than 1 part by weight, sufficient rigidity may not be obtained, whereas, if it exceeds 150 parts by weight, the strength during molding and flame retardancy may be degraded.

<Component C-1: Glass Fiber>

As for the glass composition of the glass fibers used in the present invention, A-glass, C-glass, E-glass and the like may be used and not particularly limited, and the glass fibers may contain a component such as $TiO_2$, $SO_3$ and $P_2O_5$ as required. However, E-glass (alkali-free glass) is more preferable when it is mixed with a thermoplastic resin. Further, two or more types of these glass fibers can also be used in combination. Glass fibers are produced by quenching molten glass while drawing it in various ways, and forming it into a desired fibrous or milled shape. In such a case, quenching and stretching conditions are not particularly limited. The cross-sectional shape may be a perfect circle, or may be an ellipse, a cocoon shape, a three-leaf shape, or any other shape other than a perfect circle. Further, a mixture of perfectly circular glass fibers and glass fibers having a shape other than a perfect circle may be used. Of these, circular glass fibers are more preferable.

It is preferable to pre-treat these glass fibers with a coupling agent such as an isocyanate-based compound, an organic silane-based compound, an organic titanate-based compound, an organic borane-based compound and an epoxy compound, or with an organic onium ion in the case of a swellable layered silicate, in order to obtain more excellent mechanical strength. The glass fibers used in the present invention preferably have a diameter (D) of 6 to 13 μm, a cut length (L) of 30 μm to 9 mm, and an L/D ratio of 2.3 to 1,500.

<Component C-2; Plate-Like Glass Filler>

Examples of the plate-shaped glass filler include glass flakes, metal-coated glass flakes, and metal oxide-coated glass flakes.

The glass flakes that serve as the substrate of the plate-shaped glass filler are plate-shaped glass fillers produced by a method such as a cylinder blowing method or a sol-gel method. The size of the raw glass flakes can be selected from various sizes depending on the degree of crushing and classification. The average particle size of the glass flakes used as the raw material is preferably 10 to 1,000 μm, more preferably 20 to 500 μm, and still more preferably 30 to

300 μm. This is because those in the above range have excellent compatibility between handleability and moldability. Usually, plate-shaped glass filler cracks when melted and kneaded with a resin, and the average particle size becomes smaller. The number-average particle size of the plate-like glass filler in the thermoplastic resin composition is preferably 10 to 200 μm, more preferably 15 to 100 μm, and still more preferably 20 to 80 μm. The number-average particle size is a value calculated by an image analyzer from an image obtained by observing under an optical microscope the residue of the plate-shaped glass filler collected by treatment such as high-temperature ashing, dissolution with a solvent, and decomposition with a chemical of a molded article,. The calculation of this value is based on a method in which the flake thickness is used as a guide and flakes having a length less than this are not counted. The thickness is preferably 0.5 to 10 μm, more preferably 1 to 8 μm, and still more preferably 1.5 to 6 μm. A plate-like glass filler having the above number-average particle size and thickness may achieve satisfactory mechanical strength, appearance and moldability.

The glass composition of the plate-shaped glass filler is not particularly limited, and various glass compositions typified by A-glass, C-glass and E-glass can be applied. Such glass filler may contain components such as $TiO_2$, $SO_3$ and $P_2$ $O_5$ as necessary. Of these, E-glass (alkali-free glass) is more preferable. From the viewpoint of improving the mechanical strength, the plate-like glass filler is preferably surface-treated with a known surface treatment agent, such as a silane coupling agent, a titanate coupling agent, or an aluminate coupling agent. The plate-like glass filler is preferably one bundled with an olefin resin, a styrene resin, an acrylic resin, a polyester resin, an epoxy resin, and a urethane resin. The amount of the sizing agent adhered to the bundling-treated plate-like glass filler is preferably 0.5 to 8% by weight, and more preferably 1 to 4% by weight, based on 100% by weight of the plate-like glass filler.

Further, the plate-shaped glass filler includes those having a surface coated with a different material. Suitable examples of such different material include metals and metal oxides. Examples of metals include silver, copper, nickel, and aluminum. Examples of metal oxides include titanium oxide, cerium oxide, zirconium oxide, iron oxide, aluminum oxide, and silicon oxide. The method for coating the surface of such different material is not particularly limited, and examples thereof include various known plating methods (e.g., electrolytic plating, electroless plating, hot-dip plating, etc.), vacuum deposition method, ion plating method, CVD method (e.g., thermal CVD, MOCVD, plasma CVD, etc.), PVD, and sputtering method.

<Component C-3: Fibrous Carbon Filler>

Examples of the fibrous carbon filler include carbon fibers, metal-coated carbon fibers, carbon milled fibers, vapor grown carbon fibers, and carbon nanotubes. The carbon nanotubes have a fiber diameter of 0.003 to 0.1 μm, and may consist of a single layer, two layers or multiple layers, and preferably multiple layers (so-called MWCNT). Of these, carbon fibers and metal-coated carbon fibers are preferable because they have excellent mechanical strength and can impart satisfactory electrical conductivity. Satisfactory electrical conductivity is one of the important properties required for resin materials in recent digital precision devices (such as digital still camera).

It is possible to use, as the carbon fiber, any of cellulose-based, polyacrylonitrile-based and pitch-based carbon fibers. It is also possible to use those obtained by a method of spinning without subjecting to an infusibilization step, typified by a method in which a raw material composition composed of a polymer and a solvent by a methylene type bond of aromatic sulfonic acids or salts thereof is spun or molded, followed by carbonization. It is also possible to use any of a widely-used type, medium elastic modulus type and high elastic modulus type carbon fibers. Of these, a polyacrylonitrile-based high elastic modulus type carbon fiber is particularly preferable. The average fiber diameter of the carbon fiber is not particularly limited, but is usually 3 to 15 μm, and preferably 5 to 13 μm. The carbon fiber having an average fiber diameter within this range may be able to exhibit satisfactory mechanical strength and fatigue properties without impairing the appearance of the molded article. The preferable fiber length of the carbon fiber is 60 to 500 μm, preferably 80 to 400 μm, and particularly preferably 100 to 300 μm, in terms of the number-average fiber length in the thermoplastic resin composition. The number-average fiber length is a value calculated by an image analyzer from an optical microscope observation of the carbon fiber residue collected by treatments such as high-temperature ashing, dissolution with a solvent, and decomposition with a chemical of the molded article. In calculation of this value, lengths less than the fiber length are not counted. The aspect ratio of the carbon fiber is preferably within a range of 10 to 200, more preferably 15 to 100, and still more preferably 20 to 50. The aspect ratio is defined as the average fiber length divided by the average fiber diameter.

Further, the surface of the carbon fiber is preferably oxidized for the purpose of enhancing the adhesion with the matrix resin and improving the mechanical strength. Examples of the oxidation treatment method include, but are not limited to, (1) a method in which carbon fibers are treated with an acid or an alkali or a salt thereof, or an oxidizing gas; (2) a method in which fibers that can be converted into carbon fibers or carbon fibers are fired at a temperature of 700°C or higher in the presence of an inert gas containing an oxygen-containing compound; and (3) a method in which carbon fibers are subjected to an oxidization treatment, followed by a heat treatment in the presence of an inert gas.

Metal-coated carbon fiber is a carbon fiber coated with a metal layer on the surface. Examples of the metal include silver, copper, nickel and aluminum, and nickel is preferable in view of the corrosion resistance of the metal layer. It is

possible to use, as the method for metal coating, various methods mentioned above for coating the surface of the plate-shaped glass filler with a different material. Of these, a plating method is preferably used. Further, in the case of such a metal-coated carbon fiber, the carbon fiber mentioned above can also be used as the original carbon fiber. The thickness of the metal coating layer is preferably 0.1 to 1 μm, more preferably 0.15 to 0.5 μm, and still more preferably 0.2 to 0.35 μm.

The carbon fiber and the metal-coated carbon fiber are preferably those subjected to a sizing treatment with an olefinic resin, a styrene-based resin, an acrylic resin, a polyester-based resin, an epoxy-based resin and a urethane-based resin. In particular, the carbon fiber treated with the urethane-based resin and the epoxy-based resin is preferable in the present invention because of excellent mechanical strength.

<Component C-4: Non-Fibrous Carbon Filler>

Examples of the non-fibrous carbon filler include carbon black, graphite, fullerene and the like. Of these, carbon black and graphite are preferable from the viewpoints of the mechanical strength, moisture heat resistance, and thermal stability. The carbon black is preferably carbon black having a DBP absorption amount of 100 ml/100 g to 500 ml/100 g in terms of the electrical conductivity. Such carbon black is generally acetylene black or ketjen black. Specific examples thereof include Denka Black manufactured by Denki Kagaku Kogyo Kabushiki Kaisha, VULCAN XC-72 and BP-2000 manufactured by Cabot Corporation, and Ketjen Black EC and Ketjen Black EC-600JD manufactured by Lion Corporation.

It is possible to use, as the graphite, either natural graphite known by the mineral name graphite, or various types of artificial graphite. It is possible to use, as natural graphite, any of amorphous graphite, vein graphite (also called lump graphite), and flake graphite. Artificial graphite is made by heat-treating amorphous carbon to artificially orient microscopic graphite crystals in an irregular arrangement, and includes not only artificial graphite used in general carbon materials, but also kish graphite, decomposed graphite, and pyrolytic graphite. Artificial graphite, which is commonly used as a carbon material, is usually produced by graphitizing petroleum coke or coal-based pitch coke as the main raw material.

The graphite of the present invention may include expanded graphite that has been made thermally expandable by a treatment such as an acid treatment, or graphite that has already been expanded. The particle size of the graphite is preferably within a range of 2 to 300 μm. The particle size is more preferably 5 to 200 μm, still more preferably 7 to 100 μm, and particularly preferably 7 to 50 μm. By satisfying this range, satisfactory mechanical strength and appearance of the molded article may be achieved. Meanwhile, if the average particle size is less than 2 μm, the effect of improving the rigidity may be reduced, and if the average particle size exceeds 300 μm, the impact resistance may deteriorate significantly and so-called graphite floating may become noticeable on the surface of the molded article, which is undesirable.

The amount of fixed carbon of the graphite of the present invention is preferably 80% by weight or more, more preferably 90% by weight or more, and still more preferably 98% by weight or more. The volatile content of the graphite of the present invention is preferably 3% by weight or less, more preferably 1.5% by weight or less, and still more preferably 1% by weight or less.

The average particle size of the graphite in the present invention refers to the particle size of the graphite itself before it is made into a resin composition, and this particle size is determined by a laser diffraction/scattering method.

The surface of the graphite may be subjected to a surface treatment such as an epoxy treatment, a urethane treatment, a silane coupling treatment, or an oxidation treatment, in order to increase the affinity with the thermoplastic resin, as long as the properties of the composition of the present invention are not impaired.

<Component C-5: Silicate Mineral>

Examples of the inorganic filler in the present invention include silicate minerals composed of at least a metal oxide component and a $SiO_2$ component, and orthosilicate, disilicate, cyclic silicate, and chain silicate are preferable. The silicate minerals are in a crystalline state, and the crystals may be in any form that each silicate mineral can have. The crystals may have various shapes such as fibers or plates.

The silicate mineral may be composite oxide, oxyacid salt (made of an ion lattice), or solid solution. Further, the composite oxide may be a combination of two or more single oxides or a combination of two or more of single oxides and oxyacid salts. Further, the solid solution may be a solid solution of two or more metal oxides, or a solid solution of two or more oxyacid salts. The silicate mineral may be a hydrate. The form of crystal water in hydrates may be any of the following: a hydrogen silicate ion as Si-OH, a hydroxy ion ($OH^-$) ionically inserted into a metal cation, and a $H_2O$ molecule inserted into a gap in the structure.

It is also possible to use, as the silicate mineral, synthetic products corresponding to natural products. It is possible to use, as the artificially synthesized product, silicate minerals obtained by various conventionally known methods, for example, various synthesis methods using solid-state reaction, hydrothermal reaction, and ultra-high pressure reaction.

Specific examples of silicate minerals in each metal oxide component include the following. The names within the parentheses are the names of minerals containing the silicate mineral as the main component, and the compounds within

the parentheses may be used as exemplified metal salts.

Examples of minerals containing $K_2O$ as the component include $K_2O{\cdot}SiO_2$, $K_2O{\cdot}4SiO_2{\cdot}H_2O$, $K_2O{\cdot}Al_2O_3{\cdot}2SiO_2$ (kalsilite), $K_2O{\cdot}Al_2O_3{\cdot}4SiO_2$ (leucite), and $K_2O{\cdot}Al_2O_3{\cdot}6SiO_2$ (orthoclase).

Examples of minerals containing $Na_2O$ as the component include $Na_2O{\cdot}SiO_2$, and hydrates thereof, $Na_2O{\cdot}2SiO_2$, $2Na_2O{\cdot}SiO_2$, $Na_2O{\cdot}4SiO_2$, $Na_2O{\cdot}3SiO_2{\cdot}3H_2O$, $Na_2O{\cdot}Al_2O_3{\cdot}2SiO_2$, $Na_2O{\cdot}Al_2O_3{\cdot}4SiO_2$ (jadeite), $2Na_2O{\cdot}3CaO{\cdot}5SiO_2$, $3Na_2O{\cdot}2CaO{\cdot}5SiO_2$, and $Na_2O{\cdot}Al_2O_3{\cdot}6SiO_2$ (albite).

Examples of minerals containing $Li_2O$ as the component include $Li_2O{\cdot}SiO_2$, $2Li_2O{\cdot}SiO_2$, $Li_2O{\cdot}SiO_2{\cdot}H_2O$, $3Li_2O{\cdot}2SiO_2$, $Li_2O{\cdot}Al_2O_3{\cdot}4SiO_2$ (petalite), $Li_2O{\cdot}Al_2O_3{\cdot}2SiO_2$ (eucryptite), and $Li_2O{\cdot}Al_2O_3{\cdot}4SiO_2$ (spodumene).

Examples of minerals containing BaO as the component include $BaO{\cdot}SiO_2$, $2BaO{\cdot}SiO_2$, $BaO{\cdot}Al_2O_3{\cdot}2SiO_2$ (celsian), and $BaO{\cdot}TiO_2{\cdot}3SiO_2$ (bentonite).

Examples of minerals containing CaO include $3CaO{\cdot}SiO_2$ (alite of cement clinker mineral), $2CaO{\cdot}SiO_2$ (belite of cement clinker mineral), $2CaO{\cdot}MgO{\cdot}2SiO_2$ (akermanite), $2CaO{\cdot}Al_2O_3{\cdot}SiO_2$ (gehlenite), solid solution of akermanite and gehlenite (melilite), $CaO{\cdot}SiO_2$ (wollastonite (both $\alpha$-type and $\beta$-type), $CaO{\cdot}MgO{\cdot}2SiO_2$ (diopside), $CaO{\cdot}MgO{\cdot}SiO_2$ (magnesium olivine), $3CaO{\cdot}MgO{\cdot}2SiO_2$ (melilite), $CaO{\cdot}Al_2O_3{\cdot}2SiO_2$ (anorthite), tobermorite group hydrates such as $5CaO{\cdot}6SiO_2\text{-}5H_2O$ (tobermorite, $5CaO{\cdot}6SiO_2{\cdot}9H_2O$ is also included), wollastonite group hydrates such as $2CaO{\cdot}SiO_2{\cdot}H_2O$ (hillebrandite), xonotlite group hydrates such as $6CaO{\cdot}6SiO_2{\cdot}H_2O$ (xonotlite), gyrolite group hydrates such as $2CaO{\cdot}SiO_2{\cdot}2H_2O$ (gyrolite), $CaO{\cdot}Al_2O_3{\cdot}2SiO_2{\cdot}H_2O$ (lawsonite), $CaO{\cdot}FeO{\cdot}2SiO_2$ (hedentite), $3CaO{\cdot}2SiO$ (chilcoanite), $3CaO{\cdot}Al_2O_3{\cdot}3SiO_2$ (grossula), $3CaO{\cdot}Fe_2O_3{\cdot}3SiO_2$ (andradite), $6CaO{\cdot}4Al_2O_3{\cdot}FeO{\cdot}SiO_2$ (pleochroite), and clinozoisite, piedmontite, allanite, vesuvianite, onoite, scotite, and augite.

Further, examples of silicate minerals containing CaO as the component include Portland cements. The type of Portland cement is not particularly limited, and ordinary, early-strength, ultrahigh-early-strength, moderate-heat, sulfate-resistant or white Portland cements may be used. Mixed cements such as blast-furnace cement, silica cement and fly ash cement may also be used as the component C. Examples of other silicate minerals containing CaO as the component include blast furnace slag and ferrite.

Examples of minerals containing ZnO as the component include $ZnO{\cdot}SiO_2$, $2ZnO{\cdot}SiO_2$ (troostite), and $4ZnO{\cdot}2SiO_2{\cdot}H_2O$ (hemimorphite). Examples of materials containing MnO as the component include $MnO{\cdot}SiO_2$, $2MnO{\cdot}SiO_2$, $CaO{\cdot}4MnO{\cdot}5SiO_2$ (rhodonite), and kozulite. Examples of minerals containing FeO include $FeO{\cdot}SiO_2$ (ferrosilite), $2FeO{\cdot}SiO_2$ (ferroolithite), $3FeO{\cdot}Al_2O_3{\cdot}3SiO_2$ (almandine), and $2CaO{\cdot}5FeO{\cdot}8SiO_2{\cdot}H_2O$ (tetractinocene).

Examples of minerals containing CoO as the component include $CoO{\cdot}SiO_2$ and $2CoO{\cdot}SiO_2$.

Examples of minerals containing MgO include $MgO{\cdot}SiO_2$ (steatite, enstatite), $2MgO{\cdot}SiO_2$ (forsterite), $3MgO{\cdot}Al_2O_3{\cdot}3SiO_2$ (byropes), $2MgO{\cdot}2Al_2O_3{\cdot}5SiO_2$ (cordierite), $2MgO{\cdot}3SiO_2{\cdot}5H_2O$, $3MgO{\cdot}4SiO_2{\cdot}H_2O$ (talc), $5MgO{\cdot}8SiO_2{\cdot}9H_2O$ (attapulgite), $4MgO{\cdot}6SiO_2{\cdot}7H_2O$ (sepiolite), $3MgO{\cdot}2SiO_2{\cdot}2H_2O$ (chrysolite), $5MgO{\cdot}2CaO{\cdot}8SiO_2{\cdot}H_2O$ (tremelite), $5MgO{\cdot}Al_2O_3{\cdot}3SiO_2{\cdot}4H_2O$ (chlorite), $K_2O{\cdot}6MgO{\cdot}Al_2O_3{\cdot}6SiO_2{\cdot}2H_2O$ (phlogovite), $Na_2O{\cdot}3MgO{\cdot}3Al_2O_3{\cdot}8SiO_2{\cdot}H_2O$ (ransene), and magnesium tourmaline, anthocene, cummingtonite, vermiculite, and smectite.

Examples of minerals containing $Fe_2O_3$ as the component include $Fe_2O_3{\cdot}SiO_2$ and the like.

Examples of minerals containing $ZrO_2$ as the component include $ZrO_2{\cdot}SiO_2$ (zircon) and AZS refractories.

Examples of minerals containing $Al_2O_3$ include $Al_2O_3{\cdot}SiO_2$ (sillimanite, andalusite, kyanite), $2Al_2O_3{\cdot}SiO_2$, $Al_2O_3{\cdot}3SiO_2$, $3Al_2O_3{\cdot}2SiO_2$ (mullite), $Al_2O_3{\cdot}2SiO_2{\cdot}2H_2O$ (kaolinite), $Al_2O_3{\cdot}4SiO_2{\cdot}H_2O$ (pyrofenite), $Al_2O_3{\cdot}4SiO_2{\cdot}H_2O$ (bentonite), $K_2O{\cdot}3Na_2O{\cdot}4Al_2O_3{\cdot}8SiO_2$ (nepheline), $K_2O{\cdot}3Al_2O_3{\cdot}6SiO_2{\cdot}2H_2O$ (muscovite, sericite), $K_2O{\cdot}6MgO{\cdot}Al_2O_3{\cdot}6SiO_2{\cdot}2H_2O$ (phlogovite), and various zeolites, fluorphlogopite, and biotite.

Of the above silicate minerals, talc, mica and wollastonite are particularly preferable because they have an excellent balance between the rigidity and impact resistance, and are excellent in moist heat resistance, thermal stability and appearance, and are also easily available.

<Component D: Flame Retardant>

A flame retardant as the component D may be any of various compounds known as flame retardants for polycarbonate resins, but is preferably at least one flame retardant selected from the group consisting of (D-1) a halogenated carbonate compound (component D-1), (D-2) a phosphate ester-based compound (component D-2), (D-3) a phosphazene compound (component D-3), (D-4) a metal sulfonate (component D-4), and (D-5) a silicone compound (component D-5).

The content of the component D is preferably 0.01 to 25 parts by weight, more preferably 0.015 to 22 parts by weight, and still more preferably 0.02 to 20 parts by weight, based on 100 parts by weight of the component A. When the content of the component D is 0.01 to 25 parts by weight, it may be possible to achieve both sufficient flame retardancy improving effect and prevention of strength reduction during molding.

<Component D-1: Halogenated Carbonate Compound>

The halogenated carbonate compound used in the present invention is preferably a halogenated carbonate compound in which the structural unit represented by the following general formula (4) accounts for at least 60 mol% of all structural units and a specific viscosity is 0.015 to 0.1:

[Chemical Formula 6]

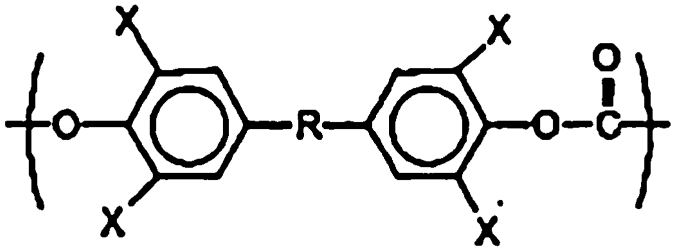

(4)

wherein, in the general formula (4), X is a halogen atom, R is an alkylene group having 1 to 4 carbon atoms, an alkylidene group having 1 to 4 carbon atoms, or $-SO_2-$.

In the formula (4), R is preferably a methylene group, an ethylene group or an isopropylidene group, $-SO_2-$, and particularly preferably an isopropylidene group. Further, X is preferably a bromine atom.

The halogenated carbonate compound contains a small amount of the residual chloroformate group terminal and has a terminal chlorine content of preferably 0.3 ppm or less, and more preferably 0.2 ppm or less. The terminal chlorine content can be determined by dissolving a sample in methylene chloride, adding 4-(p-nitrobenzyl)pyridine to react with terminal chlorine (terminal chloroformate) and measuring the terminal chlorine using an ultraviolet visible spectrophotometer (U-3200, manufactured by Hitachi, Ltd.). If the terminal chlorine content is 0.3 ppm or less, the heat stability of the polycarbonate resin composition is more improved and high-temperature molding becomes possible, and thus a resin composition having more excellent moldability may be provided.

The halogenated carbonate compound preferably has few remaining hydroxyl group terminals. More specifically, the amount of terminal hydroxyl groups is preferably 0.0005 mol or less, and more preferably 0.0003 mol or less, based on 1 mol of the constituent unit of the halogenated carbonate compound. The amount of the terminal hydroxyl group can be determined by dissolving the sample in deuterated chloroform and measuring by $^1H$-NMR method. When the amount of the terminal hydroxyl group falls within the above range, the heat stability of the polycarbonate resin composition may be further improved.

The specific viscosity of the halogenated carbonate compound is preferably in a range of 0.015 to 0.1, and more preferably 0.015 to 0.08. The specific viscosity of the halogenated carbonate compound was calculated according to the calculation formula used in calculating the viscosity-average molecular weight of the polycarbonate resin which is the above-mentioned component A-1 of the present invention.

Such halogenated carbonate compound is commercially available, and examples thereof include a tetrabromobisphenol A carbonate oligomer (product names of FG-7000 and FG-8500) manufactured by Teijin Limited, which can be used in the present invention.

<Component D-2: Phosphate Ester-Based Compound>

The phosphate ester-based compound used in the present invention is a phosphate-based ester compound excluding the component B, and a phosphate compound, particularly an aryl phosphate compound, is preferable.

The phosphate compound preferably has a molecular weight of 300 or more. If the molecular weight is less than 300, the difference between the boiling point of the phosphate compound and the combustion temperature of the resin composition may become large, and volatilization of phosphate compound may increase during combustion, which may reduce its effect as the flame retardant.

It is possible to use, as such phosphate compound, various phosphate compounds conventionally known as the flame retardant, and more preferably, examples thereof include one or more phosphate compounds represented by the following general formula (5):

[Chemical Formula 7]

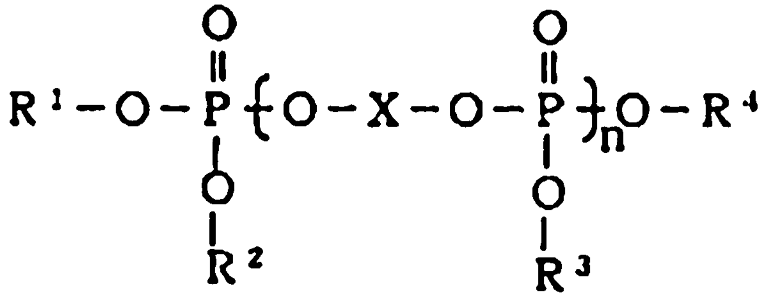

(5)

wherein, in the general formula (5), X is a dihydric phenol residue derived from a dihydroxy compound selected from the group consisting of hydroquinone, resorcinol, bis(4-hydroxydiphenyl)methane, bisphenol A, dihydroxydiphenyl, dihydroxynaphthalene, bis(4-hydroxyphenyl)sulfone, bis(4-hydroxyphenyl)ketone, and bis(4-hydroxyphenyl)sulfide, n is an integer of 0 to 5, or in the case of a mixture of phosphate esters having different n numbers, it is an average value thereof, and $R^1$ , $R^2$, $R^3$ and $R^4$ are each independently a monohydric phenol residue derived from an aryl group selected from the group consisting of phenol, cresol, xylenol, isopropylphenol, butylphenol, and p-cumylphenol.

The phosphate compound of the above general formula may be a mixture of compounds having different n numbers, and in the case of such mixture, the average n number is preferably within a range of 0.5 to 1.5, more preferably 0.8 to 1.2, still more preferably 0.95 to 1.15, and particularly preferably 1 to 1.14.

Preferred specific examples of the dihydric phenol from which X in the above general formula (5) is derived include resorcinol, bisphenol A, and dihydroxydiphenyl, and of these, resorcinol and bisphenol A are preferable.

Preferred specific examples of the monohydric phenol from which $R^1$ , $R^2$, $R^3$ and $R^4$ in the above general formula (5) are derived are phenol, cresol, xylenol, and 2,6-dimethylphenol, and of these, phenol and 2,6-dimethylphenol are preferable.

Specific examples of the phosphate compound represented by the above general formula (5) are preferably monophosphate compounds such as triphenyl phosphate and tri(2,6-xylyl)phosphate, and phosphate oligomers mainly composed of resorcinol bis(di(2,6-xylyl)phosphate), phosphate oligomers mainly composed of 4,4-dihydroxydiphenyl bis(diphenyl phosphate), and phosphoric ester oligomers mainly composed of bisphenol A bis(diphenyl phosphate). Of these, phosphate oligomers mainly composed of resorcinol bis(di(2,6-xylyl)phosphate), phosphate oligomers mainly composed of 4,4-dihydroxydiphenyl bis(diphenyl phosphate), and phosphoric ester oligomers mainly composed of bisphenol A bis(diphenyl phosphate) are preferable.

<Component D-3: Phosphazene Compound>

The phosphazene compound used in the present invention is not particularly limited as long as it contains no halogen atom and has a phosphazene structure in the molecule. The phosphazene structure referred to here means a structure represented by the formula: -P(R2)=N-, where R2 is an organic group. Phosphazenes are represented by the general formulas (6) and (7):

[Chemical Formula 8]

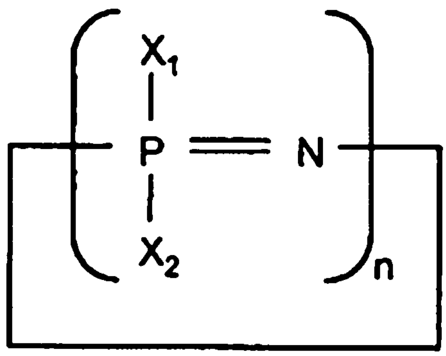

(6)

[Chemical Formula 9]

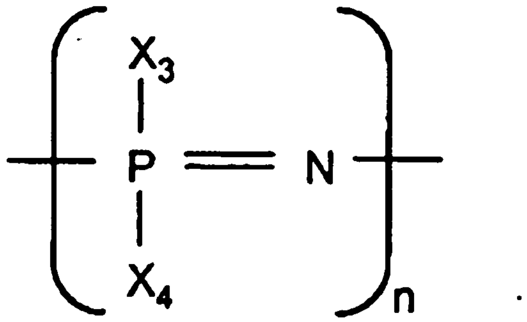

(7)

wherein, in formulas (6) and (7), $X_1$ , $X_2$, $X_3$ and $X_4$ represent hydrogen, a hydroxyl group, an amino group, or an organic group containing no halogen atom, and n represents an integer of 3 to 10.

In the above general formulas (6) and (7), examples of the organic group containing no halogen atom, which is represented by $X_1$ , $X_2$, $X_3$ and $X_4$, include an alkoxy group, a phenyl group, an amino group, an allyl group and the like. Of these, a cyclic phenoxyphosphazene represented by the following general formula (8) is preferable:

[Chemical Formula 10]

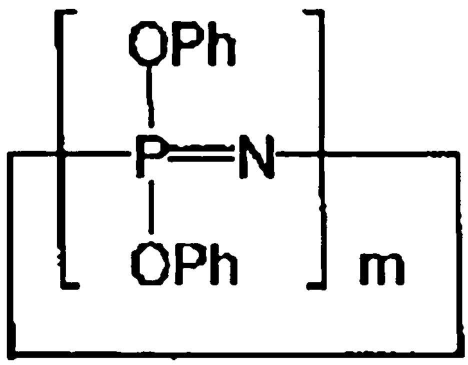

(8)

wherein, in formula (8), m represents an integer of 3 to 25, and Ph represents a phenyl group.

Examples of commercially available phosphazene compounds include SPS-100, SPR-100, SA-100, SPB-100, and SPB-100L (all of which are manufactured by Otsuka Chemical Co., Ltd.), FP-100, and FP-110 (all of which are manufactured by Fushimi Pharmaceutical Co., Ltd.).

<Component D-4: Sulfonic Acid Metal Salt>

The metal used in the metal sulfonate used in the present invention is preferably an alkali metal or an alkaline earth metal, and more preferably an alkali metal. Examples of the alkali metal include lithium, sodium, potassium, rubidium, and cesium, and examples of the alkaline earth metal include beryllium, magnesium, calcium, strontium, and barium, and lithium, sodium, and potassium are particularly preferable.

The sulfonic acid used in the sulfonic acid metal salt used in the present invention is preferably an organic sulfonic acid, and more preferably an aliphatic sulfonic acid or an aromatic sulfonic acid.

The aliphatic sulfonic acid is preferably an alkylsulfonic acid, more preferably a fluoroalkylsulfonic acid in which a part or all of the alkyl group is substituted with a fluorine atom, and most preferably a perfluoroalkylsulfonic acid in which all of the alkyl group is substituted with a fluorine atom. Preferred examples of the perfluoroalkylsulfonic acid include perfluoromethanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, and perfluorooctanesulfonic acid, and those having 1 to 8 carbon atoms are particularly preferable. These can be used alone, or in combination of two or more thereof.

Examples of the aromatic sulfonic acid include at least one acid selected from the group consisting of sulfonic acids of monomeric or polymeric aromatic sulfides, sulfonic acids of aromatic carboxylic acids and esters, sulfonic acids of monomeric or polymeric aromatic ethers, sulfonic acids of aromatic sulfonates, monomeric or polymeric aromatic sulfonic

acids, monomeric or polymeric aromatic sulfonic acids, sulfonic acids of aromatic ketones, heterocyclic sulfonic acids, sulfonic acids of aromatic sulfoxides, and condensates of aromatic sulfonic acids by methylene type bond, and these can be used alone, or in combination of two or more thereof.

<Component D-5: Silicone Compound>

The silicone compound used in the present invention preferably has a highly active group, and suitable examples thereof include an alkoxy group or a Si-H group. The content of such group is preferably within a range of 0.1 to 1.2 mol/100 g, more preferably 0.12 to 1 mol/100 g, and still more preferably 0.15 to 0.6 mol/100 g. Such ratio can be determined by measuring the amount of hydrogen or alcohol generated per unit weight of the silicone compound by an alkali decomposition method.

The alkoxy group is preferably an alkoxy group having 1 to 4 carbon atoms, and particularly preferably a methoxy group.

Generally, the structure of a silicone compound is formed by arbitrarily combining the following four types of siloxane units. That is, M unit: monofunctional siloxane units such as $(CH_3)_3\ SiO_{1/2}$, $H(CH_3\ )_2\ SiO_{1/2}$ , $H_2\ (CH_3\ )SiO_{1/2}$, $(CH_3\ )2\ (CH_2\ {=}CH)SiO_{1/2}$, $(CH_3\ )2\ (C_6\ H_5\ )SiO_{1/2}$, and $(CH_3\ )(C_6\ H_5\ )(CH_2\ {=}CH)SiO_{1/2}$; D unit: difunctional siloxane units such as $(CH_3\ )_2\ SiO$, $H(CH_3\ )SiO$, $H_2\ SiO$, $H(C_6H_5\ )SiO$, and $(CH_3\ )(CH_2\ {=}CH)SiO$, $(C_6\ H_5\ )_2\ SiO$; T unit: trifunctional siloxane units such as $(CH_3\ )SiO_{3\ /\ 2}$, $(C_3\ H_7\ )SiO_{3\ /\ 2}$, $HSiO_{3\ /\ 2}$, $(CH_2\ {=}CH)SiO_{3\ /\ 2}$, and $(C_6\ H_5\ )SiO_{3\ /\ 2}$ ; and Q unit: tetrafunctional siloxane unit represented by $SiO_2$ .

Specific examples of the structure of the silicone compound used in the silicone-based flame retardant include the rational formulas Dn, Tp, MmDn, MmTp, MmQq, MmDnTp, MmDnQq, MmTpQq, MmDnTpQq, DnTp, DnQq, and DnTpQq. Of these, preferable structures of the silicone compound are MmDn, MmTp, MmDnTp and MmDnQq, and more preferable structures are MmDn and MmDnTp.

Here, the coefficients m, n, p, and q in the rational formula are integers of 1 or more that represent the degree of polymerization of each siloxane unit, and the total of the coefficients in each rational formula is defined as the average degree of polymerization of the silicone compound. The average degree of polymerization is preferably within a range of 3 to 150, more preferably 3 to 80, still more preferably 3 to 60, and particularly preferably 4 to 40. The more the content falls within this preferable range, the more excellent the flame retardancy becomes. Further, as mentioned below, silicone compounds containing a prescribed amount of aromatic groups are also excellent in transparency and color. As a result, satisfactory reflected light is obtained.

Further, when any of m, n, p, and q is a numerical value of 2 or more, the siloxane unit with that coefficient can be two or more types of siloxane units having different hydrogen atoms or organic residues bonded thereto.

The silicone compound may be either linear or branched. The organic residue bonded to the silicon atom is preferably an organic residue having 1 to 30 carbon atoms, more preferably 1 to 20 carbon atoms. Specific examples of such organic residue include alkyl groups such as a methyl group, an ethyl group, a propyl group, a butyl group, a hexyl group, and a decyl group, cycloalkyl groups such as a cyclohexyl groups, aryl groups such as a phenyl group, and aralkyl groups such as tolyl group. Alkyl groups having 1 to 8 carbon atoms, alkenyl groups and aryl groups are more preferable. The alkyl groups are particularly preferably alkyl groups having 1 to 4 carbon atoms, such as a methyl group, an ethyl group and a propyl group.

Further, the silicone compound used as the silicone flame retardant preferably contains an aryl group. Meanwhile, the silane and siloxane compounds used as organic surface treatment agents for titanium dioxide pigments are clearly distinguished from silicone-based flame retardants in their preferable embodiments in that more favorable effects are obtained when they do not contain aryl groups. More preferable silicone-based flame retardants are silicone compounds containing aromatic groups in a proportion (aromatic group amount) of 10 to 70% by weight (more preferably 15 to 60% by weight).

<Component E: Anti-Drip Agent>

The anti-drip agent used as the component E in the present invention may include fluorine-containing polymers having fibril forming ability, and examples of such polymer include polytetrafluoroethylene, tetrafluoroethylene copolymers (e.g., tetrafluoroethylene/hexafluoropropylene copolymers), partially fluorinated polymers such as those disclosed in U.S. Pat. No. 4,379,910, and polycarbonate resins produced from fluorinated diphenols. Of these, polytetrafluoroethylene (hereinafter sometimes referred to as PTFE) is preferable.

PTFE having fibril forming ability has an extremely high molecular weight and tends to become fibrous through the bonding of PTFEs by an external function such as shearing force. The number-average molecular weight determined from standard specific gravity is preferably 1,000,000 to 10, 000,000, and more preferably 2,000,000 to 9,000,000. PTFE in the form of an aqueous dispersion besides a solid may also be used. PTFE having fibril forming ability may be used as a PTEF mixture with other resins in order to improve the dispersibility in a resin and to obtain more satisfactory flame

retardancy and mechanical properties.

Examples of commercially available products of PTFE having fibril forming ability include Teflon (registered trademark) 6-J manufactured by Chemours-Mitsui Fluoroproducts Co., Ltd., Polyflon MPA FA500H and F-201 manufactured by Daikin Industries, Ltd. and the like. Typical examples of commercially available products of the aqueous dispersion of PTFE include Fluon D series manufactured by Daikin Industries, Ltd., Teflon (registered trademark) 31-JR manufactured by Chemours-Mitsui Fluoroproducts Co., Ltd. and the like.

It is possible to use, as PTFE in a mixture form, those obtained by (1) a method in which an aqueous dispersion of PTFE and an aqueous dispersion or a solution of an organic polymer are mixed to perform co-precipitation, thus obtaining a coaggregation mixture (method mentioned in JP 60-258263 A and JP 63-154744 A), (2) a method in which an aqueous dispersion of PTFE and dried organic polymer particles are mixed (method mentioned in JP 4-272957 A), (3) a method in which an aqueous dispersion of PTFE and an organic polymer particle solution are uniformly mixed and media thereof are simultaneously removed from the mixture (method mentioned in JP 06-220210 A and JP 08-188653 A), (4) a method in which a monomer forming an organic polymer is polymerized in an aqueous dispersion of PTFE (method mentioned in JP 9-95583 A), and (5) a method in which an aqueous dispersion of PTFE and a dispersion of an organic polymer are uniformly mixed and a vinyl-based monomer is polymerized in the mixed dispersion to obtain a mixture (method mentioned in JP 11-29679 A) may be used. Examples of commercially available products of PTFE in these mixture forms include "METABLEN A3800" (product name) and "METABLEN A3750" manufactured by Mitsubishi Chemical Corporation.

As for the ratio of PTFE in the mixture form, the content of PTFE is preferably 1 to 60% by weight, and more preferably 5 to 55% by weight, based on 100% by weight of the PTFE mixture. If the content of PTFE falls within the above range, satisfactory dispersibility of PTFE may be achieved.

Examples of the styrene-based monomer used in the organic polymer used in the polytetrafluoroethylene-based mixture include, but are not limited to, styrene which may be substituted with at least one group selected from the group consisting of an alkyl group having 1 to 6 carbon atoms, an alkoxy group having 1 to 6 carbon atoms and halogen, for example, orthomethylstyrene, meta-methylstyrene, para-methylstyrene, dimethylstyrene, ethyl-styrene, para-tert-butylstyrene, methoxystyrene, fluorostyrene, monobromostyrene, dibromostyrene, tribromostyrene, vinyl xylene and vinyl naphthalene. The styrene-based monomers may be used alone, or in combination of two or more thereof.

The acrylic monomer used in the organic polymer used in the polytetrafluoroethylene-based mixture includes (meth)acrylate derivatives which may be substituted. Specific examples of the acrylic monomer include, but are not limited to, (meth)acrylate derivatives which may be substituted by at least one group selected from the group consisting of an alkyl group having 1 to 20 carbon atoms, a cycloalkyl group having 3 to 8 carbon atoms, an aryl group and a glycidyl group, for example, (meth)acrylonitrile, methyl (meth)acrylate, ethyl (meth)acrylate, propyl (meth)acrylate, butyl (meth)acrylate, amyl (meth)acrylate, hexyl (meth)acrylate, 2-ethylhexyl (meth)acrylate, cyclohexyl (meth)acrylate, octyl (meth)acrylate, dodecyl (meth)acrylate, phenyl (meth)acrylate, benzyl (meth)acrylate and glycidyl (meth)acrylate; and maleimides which may be substituted with an alkyl group having 1 to 6 carbon atoms or an aryl group, for example, maleimide, N-methyl-maleimide and N-phenyl-maleimide, maleic acid, phthalic acid and itaconic acid. The acrylic monomers may be used alone, or in combination of two or more thereof. Of these, (meth) acrylonitrile is preferable.

Coated branched PTFE may be used as the dripping inhibitor in the present invention. The coated branched PTFE is a polytetrafluoroethylene-based mixture composed of branched polytetrafluoroethylene particles and an organic polymer and has a coating layer made of an organic polymer, preferably a polymer including a styrene-based monomer derived unit and/or an acrylic monomer derived unit, on the exterior of branched polytetrafluoroethylene. The coating layer is formed on the surface of branched polytetrafluoroethylene. The coating layer preferably contains a copolymer of a styrene-based monomer and an acrylic monomer.

The polytetrafluoroethylene contained in the coated branched PTFE is branched polytetrafluoroethylene. When the contained polytetrafluoroethylene is not branched polytetrafluoroethylene, the dripping preventing effect becomes unsatisfactory if a small amount of polytetrafluoroethylene is added. The branched polytetrafluoroethylene is particulate with a particle diameter of preferably 0.1 to 0.6 μm, more preferably 0.3 to 0.5 μm, and still more preferably 0.3 to 0.4 μm. If the particle diameter is less than 0.1 μm, a molded article has excellent surface appearance but it is difficult to acquire commercially available polytetrafluoroethylene having a particle diameter of less than 0.1 μm. If the particle diameter is more than 0.6 μm, the surface appearance of a molded article may deteriorate. The number-average molecular weight of the polytetrafluoroethylene used in the present invention is preferably $1 \times 10^4$ to $1 \times 10^7$, and more preferably $2 \times 10^6$ to $9 \times 10^6$. In general, polytetrafluoroethylene having a high molecular weight is more preferable from the viewpoint of the stability. It may be in a powder or dispersion form.

The content of the branched polytetrafluoroethylene in the coated branched PTFE is preferably 20 to 60 parts by weight, more preferably 40 to 55 parts by weight, still more preferably 47 to 53 parts by weight, particularly preferably 48 to 52 parts by weight, and most preferably 49 to 51 parts by weight, based on 100 parts by weight of the total weight of the coated branched PTFE. When the content of the branched polytetrafluoroethylene falls within the above range, satisfactory dispersibility of the branched polytetrafluoroethylene may be achieved.

The content of the component E is preferably 0.05 to 3 parts by weight, more preferably 0.1 to 2 parts by weight,

and still more preferably 0.2 to 1.5 parts by weight, based on 100 parts by weight of the component A. If the content thereof is more than this range, the cost may increase and the extrudability may become insufficient. Meanwhile, if the content thereof is less than this range, the flame retardancy may become insufficient and the tensile strength may be reduced. The ratio of the component E indicates the net amount of the dripping inhibitor, and PTFE in a mixed form indicates the net amount of PTFE.

<Production of Thermoplastic Resin Composition>

Any optional methods may be used for producing the thermoplastic resin composition of the present invention. Examples thereof include a method in which the components A and B and other optional components are thoroughly mixed using premixing means such as a V-mixer, a Henschel mixer, a mechanochemical device and an extrusion mixer, and then the premix is granulated as necessary using an extrusion granulator or a briquetting machine, melt-kneaded in a melt kneader typified by a bent-type twin-screw extruder, and then pelletized by a pelletizer.

Other examples include a method in which each component is independently fed to a melt kneader such as a vented twin-screw extruder, and a method in which a part of each component is premixed and then fed to a melt kneader independently of the remaining components. Examples of a method for premixing a part of each component is a method in which the components other than component A are premixed in advance, and then mixed with the thermoplastic resin of component A or directly fed to an extruder.

When component A has a powder form, examples of the method of premixing include a method in which a part of the powder is mixed with the additive to be mixed to prepare a master batch of the additive diluted with the powder, and the master batch is used. It is also possible to mention a method in which one component is independently fed into the middle of the melt extruder. When the components to be mixed are liquid, a so-called liquid injection device or liquid addition device can be used to supply the components to the melt extruder.

An extruder having a vent from which water contained in the raw material and a volatile gas generated from the molten kneaded resin can be removed may be preferably used. A vacuum pump is preferably installed to discharge the generated water and volatile gas from the vent to the outside of the extruder efficiently. A screen for removing foreign matter contained in the extruded raw material may be installed in a zone before the die of the extruder to remove the foreign matter from the resin composition. Examples of the screen include a metal net, a screen changer and a sintered metal plate (such as a disk filter).

Examples of the melt kneader include a twin-screw extruder, a Banbury mixer, a kneading roller, a single screw extruder, a multi-screw extruder having three or more screws and the like.

The resin extruded as described above is pelletized by directly cutting it or by forming it into a strand and cutting the strand with a pelletizer. When the influence of extraneous dust must be reduced at the time of pelletization, the atmosphere surrounding the extruder is preferably made clean. In the production of the above pellets, the narrowing of the form distribution of the pellets, the reduction of the number of miscut products and the amount of fine powders produced at the time of conveyance or transportation and the cutting of the number of cells (vacuum cells) formed in the strand or pellet can be suitably carried out by using various methods already proposed for polycarbonate resins for use in optical disks. Thereby, it is possible to increase the molding cycle and reduce the generation rate of a defect such as a silver streak. The shape of the pellet may be columnar, rectangular column-like, spherical or other ordinary shape, preferably columnar. The diameter of the column is preferably 1 to 5 mm, more preferably 1.5 to 4 mm, and still more preferably 2 to 3.3 mm. The length of the column is preferably 1 to 30 mm, more preferably 2 to 5 mm, and still more preferably 2.5 to 3.5 mm.

<Regarding Molded Article>

The thermoplastic resin composition of the present invention can be used to produce various products by injection molding the pellets obtained by the method mentioned above. It is possible to obtain molded articles by using, in addition to ordinary molding methods, injection molding methods such as injection compression molding, injection press molding, gas assist injection molding, foam molding (including a method of injecting a supercritical fluid), insert molding, in-mold coating molding, heat insulating mold molding, quick heating/cooling mold molding, two color molding, sandwich molding and ultrahigh-speed injection molding as appropriate according to purposes. The advantages of these various molding methods are already widely known. It is also possible to select, as a molding system, either of a cold runner system and a hot runner system.

The form of the present invention that the present inventors considers to be the best at present is a collection of preferable ranges of each of the above requirements and, for example, representative example thereof will be described in the following Examples. Of course, the present invention is not limited to these forms.

[EXAMPLES]

The present invention will be further described below by way of Examples, but is not limited thereto. The evaluation was carried out on the following items.

(i) Discoloration During Retention

The pellets obtained from each composition of Examples were dried in a hot air dryer at 100°C for 5 hours, and then molded continuously into square plates of 150 mm × 150 mm × 2 mmt in 100 shots using an injection molding machine [Sumitomo Heavy Industries, Ltd., SG150U·S-M IV] at the temperatures shown in the table. Thereafter, the operation of the molding machine was stopped and the resin was allowed to remain in the cylinder. After 15 minutes, the square plate was molded again, and the hue of the square plate before and after retention was measured using a color analyzer TC-1800MKII manufactured by Tokyo Denshoku Co., Ltd., and the color difference (ΔE) before and after retention was calculated.

(ii) Strength Retention Rate During Retention

A high-speed surface impact test was carried out using the square plate used in "(i) Discoloration During Retention". The fracture energy of the square plate before and after retention was measured, and the strength retention before and after retention was calculated by the following formula. The measurements were carried out using a Hydroshot HTM-1 manufactured by Shimadzu Corporation at 23°C and a test speed of 7 m/s.

Strength retention rate (%) = [fracture energy after retention/fracture energy before retention] × 100

(iii) Recyclability

The square plates used in "(i) Discoloration During Retention" before retention were left horizontally outdoors in Midori-ku, Chiba City for one year, and then crushed and molded again into square plates. The hue and fracture energy of the square plates before being left to stand and the regenerated and molded square plates were measured in the same manner as in "(i) Discoloration During Retention" and "(ii) Strength Retention Rate During Retention", and the color difference (ΔE) and strength retention between the two were calculated.

(iv) Flame Retardancy

The pellets obtained from each composition of Examples were dried in a hot air dryer at 100°C for 5 hours, and then continuously molded into UL test specimens with a thickness of 1.5 mm at the temperatures shown in the table using an injection molding machine [Sumitomo Heavy Industries, Ltd., SG150U·S-M IV]. The specimens were then classified into four types, V-0, V-1, V-2, and HB, according to the method mentioned in UL94. When the flammability was so poor that it could not be classified into any category, it was designated as Not-V. The flame retardancy must be classified as V-0, V-1, V-2, or HB.

(v) Flexural Modulus

The flexural modulus was measured using the test pieces before retention used in "(ii) Strength Retention Rate During Retention".

[Examples 1-1 to 1-12, Examples 2-1 to 2-15, Examples 3-1 to 3-13, Comparative Examples 1-1 to 1-5, Comparative Examples 2-1 to 2-3, Comparative Examples 3-1 to 3-3, Reference Examples 1 to 3]

Resin compositions having the mixing ratios in Tables 1, 2 and 3 were prepared in the following manner. The explanation will follow the symbols in the table below. Each component was weighed out in the proportions shown in the table and mixed uniformly using a tumbler, and the mixture was then fed into an extruder to prepare a resin composition. The extruder used was a vented twin-screw extruder (TEX-30XSST, fully intermeshing, same direction rotation, two-thread screw) manufactured by Japan Steel Works, Ltd. Of inorganic fillers, a glass fiber, a plate-like glass filler, and a fibrous carbon filler were fed from the second supply port, and the other components were fed from the first supply port. The extrusion conditions were as follows: a discharge rate of 20 kg/h, a screw rotation speed of 150 rpm, and a vent vacuum of 3 kPa, and the extrusion temperature was as the temperature shown in the table. The pellets thus obtained were used to mold test pieces for evaluation using an injection molding machine according to the method mentioned above. The

evaluation results are shown in Tables 1 to 3. The components represented by symbols in Tables 1 to 3 are as follows:

(Component A: Thermoplastic Resin)

A-1-1: Aromatic polycarbonate resin (polycarbonate resin powder having a viscosity-average molecular weight of 20,700 made from bisphenol A and phosgene by a conventional method, Panlite L-1225WS (product name), manufactured by Teijin Limited)
A-1-2: Modified polycarbonate resin powder having a viscosity-average molecular weight of 22,300, obtained by the following production method.

In a reactor equipped with a thermometer, a stirrer and a reflux condenser, 4,229 parts of an aqueous 48% sodium hydroxide solution and 20,000 parts of ion-exchanged water were charged, and after dissolving 2,191 parts of 1,1-bis(4-hydroxy-3-methylphenyl)propane (hereinafter abbreviated as Bis-1), 1,951 parts of bisphenol A and 8.3 parts of hydrosulfite therein, 11,620 parts of methylene chloride was added and 2,200 parts of phosgene was blown therein over about 60 minutes under stirring at 15 to 25°C. After completion of the blowing of phosgene, 704 parts of an aqueous 48% sodium hydroxide solution and 102 parts of p-tert-butylphenol were added, stirring was resumed, and after emulsification, 4.32 parts of triethylamine was added, followed by further stirring at 28 to 33°C for 1 hour to complete the reaction. After completion of the reaction, the product was diluted with methylene chloride and washed with water, acidified with hydrochloric acid and washed with water, and then washed with water repeatedly until the conductivity of the aqueous phase became almost the same as that of ion-exchanged water, thus obtaining a methylene chloride solution of a polycarbonate resin. Next, this solution was passed through a filter with an opening of 0.3 μm and added dropwise into warm water in a kneader with an isolation chamber and a foreign matter outlet in the bearing part, and then the polycarbonate resin was formed into flakes while distilling off the methylene chloride. The liquid-containing flakes were subsequently pulverized and dried to obtain a powder.

A-1-3: Polycarbonate-polydiorganosiloxane copolymer resin (viscosity-average molecular weight of 19,800, PDMS content of 4.2%, PDMS polymerization degree of 37)
A-2: ABS resin (SANTAC AT-07 (product name), manufactured by NIPPON A&L INC., butadiene rubber component of about 17.5% by weight, weight-average rubber particle diameter of 1.2 μm, produced by bulk polymerization)
A-3: Polyethylene terephthalate (TRN-8550FF (product name), manufactured by Teijin Limited)
A-4: AS resin (LITAC A BS-207 (product name), manufactured by NIPPON A&L INC.)
A-5: PS resin (GP-110 (product name), manufactured by IRPC Public Company Limited)
A-6: AAS resin (777K (product name), manufactured by INEOS Ltd.)

(Component B: Phosphate Metal Salt)

B-1: Zinc stearyl phosphate (manufactured by Sakai Chemical Industry Co., Ltd., LBP-1830 refined (product name), acid value of 49.9 mg KOH/g)
B-2: Zinc stearyl phosphate (manufactured by Johoku Chemical Industry Co., Ltd., JP-518Zn (product name), acid value of 54.5 mg KOH/g)
B-3: (Comparative example) Zinc stearyl phosphate (manufactured by Sakai Chemical Industry Co., Ltd., LBP-1830 (product name), acid value of 56.6 mg KOH/g)

(Component C: Inorganic Filler)

C-1: Glass fiber (3PE937 (product name), manufactured by Nitto Boseki Co., Ltd.)
C-2: Glass flake (MEG160FYX (product name), manufactured by Nippon Sheet Glass Co., Ltd.)
C-3: Carbon fiber (HT C493 (product name), manufactured by Teijin Ltd.)
C-4: Non-fibrous carbon filler (EN-250HT (product name), manufactured by Nishimura Graphite Co., Ltd.)
C-5: Talc (Victorilite TK-RC (product name), manufactured by Shokozan Mining Co., Ltd.)

(Component D: Flame Retardant)

D-1: Tetrabromobisphenol A carbonate oligomer (FG-7000 (product name), manufactured by Teijin Limited)
D-2: Phosphate ester mainly composed of Resorcinol [di(2,6-dimethylphenyl)phosphate] (PX-200 (product name), manufactured by Daihachi Chemical Industry Co., Ltd.)
D-3: Cyclic phenoxyphosphazene (FP-110 (product name), manufactured by Fushimi Pharmaceutical Co., Ltd.)
D-4: Potassium perfluorobutanesulfonate (Eftop KSBF (product name), manufactured by Mitsubishi Materials Corporation)
D-5: Organic siloxane flame retardant containing Si-H, methyl and phenyl groups (X-40-2600J (product name), manufactured by Shin-Etsu Chemical Co., Ltd.)

(Component E: Anti-Drip Agent)

E-1: Polytetrafluoroethylene (POLYFLON MPFA500B (product name), manufactured by Daikin Industries, Ltd.)

[Table 1]

| | | Unit | Example | | | | | | | | | | | | Comparative Example | | | | |
|---|---|---|---|---|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 | 1-1 | 1-2 | 1-3 | 1-4 | 1-5 |
| Component A | A-1-1 | parts by weight | 100 | | | 70 | 70 | 80 | 80 | 70 | 100 | 100 | 100 | 100 | 100 | 70 | 70 | 100 | 100 |
| | A-1-2 | parts by weight | | 100 | | | | | | | | | | | | | | | |
| | A-1-3 | parts by weight | | | 100 | | | | | | | | | | | | | | |
| | A-2 | parts by weight | | | | 30 | | | | | | | | | | 30 | | | |
| | A-3 | parts by weight | | | | | 30 | | | | | | | | | | 30 | | |
| | A-4 | parts by weight | | | | | | 20 | | | | | | | | | | | |
| | A-5 | parts by weight | | | | | | | 20 | | | | | | | | | | |
| | A-6 | parts by weight | | | | | | | | 30 | | | | | | | | | |
| Total of component A | | parts by weight | 100 | 100 | 100 | 100 | 100 | 100 | 100 | 100 | 100 | 100 | 100 | 100 | 100 | 100 | 100 | 100 | 100 |
| Component B | B-1 | parts by weight | 0.05 | 0.05 | 0.05 | 0.05 | 0.05 | 0.05 | 0.05 | 0.05 | 0.50 | 0.01 | 0.80 | | | | | 1.50 | |
| | B-2 | parts by weight | | | | | | | | | | | | 0.05 | | | | | |
| | B-3 | parts by weight | | | | | | | | | | | | | 0.05 | 0.05 | 0.05 | | |
| Processing temperature | Extrusion | °C | 300 | 300 | 300 | 260 | 270 | 260 | 260 | 260 | 300 | 300 | 300 | 300 | 300 | 260 | 270 | 300 | 300 |
| | Molding | °C | 320 | 320 | 320 | 280 | 280 | 280 | 280 | 280 | 320 | 320 | 320 | 320 | 320 | 280 | 280 | 320 | 320 |
| During retention | Color difference | ΔE | 0.9 | 1.2 | 1.2 | 2.3 | 1.6 | 1.9 | 1.2 | 2.1 | 2.4 | 1.2 | 2.5 | 2.3 | 2.8 | 4.0 | 4.7 | 5.1 | 2.7 |
| | Strength retention rate | % | 94 | 94 | 95 | 87 | 90 | 90 | 89 | 88 | 87 | 95 | 84 | 88 | 14 | 68 | 51 | 16 | 18 |

(continued)

| | | Unit | Example | | | | | | | | | | | | Comparative Example | | | | |
|---|---|---|---|---|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 | 1-1 | 1-2 | 1-3 | 1-4 | 1-5 |
| Recyclability | Color difference | ΔE | 3.4 | 3.5 | 3.7 | 4.7 | 3.8 | 2.7 | 3.1 | 4.1 | 3.9 | 3.9 | 6.2 | 5.3 | 12.8 | 9.4 | 8.1 | 22.2 | 12.3 |
| | Strength retention rate | % | 90 | 88 | 91 | 70 | 88 | 81 | 84 | 84 | 88 | 87 | 74 | 79 | 13 | 45 | 12 | 11 | 8 |

[Table 2]

| | | | Example | | | | | | | | | | | | | | | Comparative Example | | | Reference Example |
|---|---|---|---|---|---|---|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 | 2-13 | 2-14 | 2-15 | 2-1 | 2-2 | 2-3 | 1 |
| Component A | A-1-1 | parts by weight | 100 | 100 | 100 | 70 | 70 | 100 | 100 | 100 | 100 | 100 | 100 | 100 | 100 | 100 | 100 | 100 | 100 | 100 | 100 |
| | A-2 | parts by weight | | | | 30 | | | | | | | | | | | | | | | |
| | A-3 | parts by weight | | | | | 30 | | | | | | | | | | | | | | |
| Total of component A | | parts by weight | 100 | 100 | 100 | 100 | 100 | 100 | 100 | 100 | 100 | 100 | 100 | 100 | 100 | 100 | 100 | 100 | 100 | 100 | 100 |
| Component B | B-1 | parts by weight | 0.05 | 0.01 | 0.8 | 0.05 | 0.05 | 0.05 | 0.1 | 0.3 | 0.05 | 0.05 | 0.05 | 0.05 | 0.05 | 0.05 | | | 1.5 | | 0.3 |
| | B-2 | parts by weight | | | | | | | | | | | | | | | 0.05 | | | | |
| | B-3 | parts by weight | | | | | | | | | | | | | | | | 0.05 | | | |
| Component C | C-1 | parts by weight | 30 | 30 | 30 | 30 | 30 | 5 | 60 | 130 | 30 | 30 | | | | | 30 | 30 | 30 | 30 | 170 |
| | C-2 | parts by weight | | | | | | | | | | | 30 | | | | | | | | |
| | C-3 | parts by weight | | | | | | | | | | | | 20 | | | | | | | |
| | C-4 | parts by weight | | | | | | | | | | | | | 30 | | | | | | |
| | C-5 | parts by weight | | | | | | | | | | | | | | 15 | | | | | |
| Component D | D-1 | parts by weight | | | | | | | | | 20 | | | | | | | | | | |
| | D-2 | parts by weight | | | | | | | | | | 10 | | | | | | | | | |
| Component E | E-1 | parts by weight | | | | | | | | | 0.4 | 0.4 | | | | | | | | | |
| Processing temperature | Extrusion | °C | 300 | 300 | 300 | 260 | 270 | 300 | 300 | 300 | 260 | 270 | 300 | 300 | 300 | 300 | 300 | 300 | 300 | 300 | 300 |
| | Molding | °C | 320 | 320 | 320 | 280 | 280 | 320 | 320 | 320 | 280 | 290 | 320 | 320 | 320 | 320 | 320 | 320 | 320 | 320 | 320 |
| During retention | Strength retention rate | % | 95 | 88 | 81 | 87 | 83 | 96 | 83 | 68 | 83 | 78 | 86 | 90 | 85 | 90 | 79 | 40 | 49 | 42 | 25 |
| Recyclability | Strength retention rate | % | 87 | 82 | 75 | 64 | 72 | 91 | 76 | 62 | 65 | 74 | 81 | 79 | 74 | 84 | 72 | 33 | 39 | 30 | 12 |
| Flame retardancy | UL-94 | | HB | HB | HB | HB | HB | HB | HB | HB | V-0 | V-0 | HB | HB | HB | HB | HB | Not-V | Not-V | Not-V | Not-V |
| Rigidity | Flexural modulus | Mpa | 5,900 | 5,800 | 5,800 | 5,800 | 5,900 | 3,100 | 8,700 | 12,200 | 5,200 | 5,300 | 5,450 | 11,000 | 7,000 | 4,500 | 5,200 | 5,100 | 5,100 | 5,100 | 14,200 |

[Table 3]

| | | Unit | Example | | | | | | | | | | | | | Comparative Example | | | Reference Example | |
|---|---|---|---|---|---|---|---|---|---|---|---|---|---|---|---|---|---|---|---|---|
| | | | 3-1 | 3-2 | 3-3 | 3-4 | 3-5 | 3-6 | 3-7 | 3-8 | 3-9 | 3-10 | 3-11 | 3-12 | 3-13 | 3-1 | 3-2 | 3-3 | 2 | 3 |
| Component A | A-1-1 | parts by weight | 100 | 70 | 70 | 100 | 100 | 100 | 100 | 100 | 100 | 100 | 100 | 100 | 100 | 100 | 100 | 100 | 100 | 100 |
| | A-2 | parts by weight | | 30 | | | | | | | | | | | | | | | | |
| | A-3 | parts by weight | | | 30 | | | | | | | | | | | | | | | |
| Total of component A | | parts by weight | 100 | 100 | 100 | 100 | 100 | 100 | 100 | 100 | 100 | 100 | 100 | 100 | 100 | 100 | 100 | 100 | 100 | 100 |
| Component B | B-1 | parts by weight | 0.05 | 0.05 | 0.05 | 0.05 | 0.05 | 0.05 | 0.05 | 0.05 | 0.50 | 0.80 | 0.01 | | 0.05 | | 1.5 | | 0.05 | 0.05 |
| | B-2 | parts by weight | | | | | | | | | | | | 0.05 | | | | | | |
| | B-3 | parts by weight | | | | | | | | | | | | | | 0.05 | | | | |
| Component D | D-1 | parts by weight | 10 | 10 | 10 | 20 | | | | | 10 | 10 | 10 | 10 | 10 | 10 | 10 | 10 | 30 | |
| | D-2 | parts by weight | | | | | 10 | | | | | | | | | | | | | |
| | D-3 | parts by weight | | | | | | 10 | | | | | | | | | | | | |
| | D-4 | parts by weight | | | | | | | 0.1 | | | | | | | | | | | |
| | D-5 | parts by weight | | | | | | | | 1 | | | | | | | | | | |
| Component E | E-1 | parts by weight | 0.4 | 0.4 | 0.4 | 0.4 | 0.4 | 0.4 | 0.4 | 0.4 | 0.4 | 0.4 | 0.4 | 0.4 | | 0.4 | 0.4 | 0.4 | 0.4 | 0.4 |
| Processing temperature | Extrusion | °C | 290 | 260 | 260 | 260 | 270 | 260 | 300 | 300 | 290 | 290 | 290 | 290 | 290 | 290 | 290 | 290 | 290 | 300 |
| | Molding | °C | 310 | 280 | 280 | 280 | 290 | 280 | 320 | 320 | 310 | 310 | 310 | 310 | 310 | 310 | 310 | 310 | 310 | 320 |
| During retention | Color difference | ΔE | 1.0 | 1.8 | 2.0 | 2.1 | 2.1 | 1.2 | 1.4 | 2.3 | 1.2 | 1.3 | 1.4 | 2.3 | 1.7 | 3.7 | 4.1 | 3.9 | 4.3 | 0.9 |
| | Strength retention rate | % | 89 | 92 | 85 | 81 | 84 | 89 | 91 | 84 | 91 | 91 | 88 | 91 | 84 | 25 | 21 | 18 | 15 | 91 |
| Recyclability | Color difference | ΔE | 4.3 | 5.1 | 4.5 | 6.1 | 2.7 | 3.0 | 3.1 | 4.1 | 3.8 | 4.0 | 4.2 | 5.4 | 4.1 | 12.1 | 18.6 | 15.6 | 13.7 | 2.9 |
| | Strength retention rate | % | 74 | 65 | 72 | 75 | 77 | 80 | 87 | 82 | 80 | 78 | 72 | 70 | 71 | 16 | 17 | 8 | 12 | 89 |
| Flame retardancy | UL-94 | | V-0 | V-0 | V-0 | V-0 | V-0 | V-0 | V-0 | V-0 | V-0 | V-0 | V-0 | V-0 | V-1 | V-0 | V-0 | V-0 | V-0 | Not-V |

## Claims

**1.** A thermoplastic resin composition comprising,

100 parts by weight of (A) a thermoplastic resin (component A), and
0.001 to 1 part by weight of (B) a phosphate metal salt having an acid value of 10 to 55 mgKOH/g (component B).

**2.** The thermoplastic resin composition according to claim 1, comprising,
1 to 150 parts by weight of (C) an inorganic filler (component C), based on 100 parts by weight of the component A.

**3.** The thermoplastic resin composition according to claim 1 or 2, comprising,
0.01 to 25 parts by weight of (D) a flame retardant (component D), based on 100 parts by weight of the component A.

**4.** The thermoplastic resin composition according to any one of claims 1 to 3, comprising,
0.05 to 3 parts by weight of (E) an anti-drip agent (component E), based on 100 parts by weight of the component A.

5. The thermoplastic resin composition according to any one of claims 1 to 4, wherein the component A is at least one thermoplastic resin selected from the group consisting of

(A-1) a polycarbonate resin (component A-1),
(A-2) an ABS resin (component A-2),
(A-3) a polyester resin (component A-3),
(A-4) an AS resin (component A-4),
(A-5) a PS resin (component A-5), and
(A-6) an AAS resin (component A-6).

6. The thermoplastic resin composition according to any one of claims 1 to 5, wherein the component A is at least one thermoplastic resin selected from the group consisting of

(A-1) a polycarbonate resin (component A-1),
(A-2) an ABS resin (component A-2), and
(A-3) a polyester resin (component A-3).

7. The thermoplastic resin composition according to any one of claims 1 to 6, wherein the content of the component A-1 is 40 to 100 parts by weight based on 100 parts by weight of the component A.

8. The thermoplastic resin composition according to any one of claims 1 to 7, wherein the component B is zinc stearyl phosphate.

9. The thermoplastic resin composition according to claim 2, wherein the component C is at least one inorganic filler selected from the group consisting of

(C-1) a glass fiber (component C-1),
(C-2) a plate-like glass filler (component C-2),
(C-3) a fibrous carbon filler (component C-3),
(C-4) a non-fibrous carbon filler (component C-4), and
(C-5) a silicate mineral (component C-5).

10. The thermoplastic resin composition according to claim 3, wherein the component D is at least one flame retardant selected from the group consisting of

(D-1) a halogenated carbonate compound (component D-1),
(D-2) a phosphate ester-based compound (component D-2),
(D-3) a phosphazene compound (component D-3),
(D-4) a sulfonic acid metal salt (component D-4), and
(D-5) a silicone compound (component D-5).

11. A molded article comprising the thermoplastic resin composition according to any one of claims 1 to 10.

**INTERNATIONAL SEARCH REPORT**

International application No.
**PCT/JP2023/045001**

**A. CLASSIFICATION OF SUBJECT MATTER**

***C08L 101/00***(2006.01)i; ***C08K 3/04***(2006.01)i; ***C08K 3/013***(2018.01)i; ***C08K 3/34***(2006.01)i; ***C08K 3/40***(2006.01)i; ***C08K 5/51***(2006.01)i; ***C08K 5/52***(2006.01)i; ***C08K 5/521***(2006.01)i; ***C08K 7/06***(2006.01)i; ***C08K 7/14***(2006.01)i; ***C08L 55/02***(2006.01)i; ***C08L 67/00***(2006.01)i; ***C08L 69/00***(2006.01)i
FI: C08L101/00; C08K5/521; C08L69/00; C08L67/00; C08L55/02; C08K5/51; C08K3/013; C08K3/40; C08K3/34; C08K3/04; C08K7/14; C08K7/06; C08K5/52

According to International Patent Classification (IPC) or to both national classification and IPC

**B. FIELDS SEARCHED**

Minimum documentation searched (classification system followed by classification symbols)

C08L101/00; C08K3/04; C08K3/013; C08K3/34; C08K3/40; C08K5/51; C08K5/52; C08K5/521; C08K7/06; C08K7/14; C08L55/02; C08L67/00; C08L69/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/153492 A1 (MITSUBISHI ENGINEERING PLASTICS CORP.) 05 August 2021 (2021-08-05) table 1, paragraph [0120], table 2, examples 2, 7 | 1-11 |
| Y | | 4 |
| X | JP 2017-193659 A (MITSUBISHI ENGINEERING PLASTICS CORP.) 26 October 2017 (2017-10-26) paragraphs [0157], [0161], [0206], [0212], [0215], table 2, example 5 | 1-3, 5-11 |
| Y | | 4 |
| Y | JP 2011-219553 A (TEIJIN CHEM. LTD.) 04 November 2011 (2011-11-04) paragraphs [0009], [0087], [0093] | 4 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045001**

| Patent document cited in search report | Publication date (day/month/year) | Patent family member(s) | Publication date (day/month/year) |
| --- | --- | --- | --- |
| WO 2021/153492 A1 | 05 August 2021 | CN 114981357 A | |
| JP 2017-193659 A | 26 October 2017 | (Family: none) | |
| JP 2011-219553 A | 04 November 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4983427 B
- JP 6172508 A
- JP 8027370 A
- JP 2001055435 A
- JP 2002117580 A
- US 4379910 A
- JP 60258263 A
- JP 63154744 A
- JP 4272957 A
- JP 6220210 A
- JP 8188653 A
- JP 9095583 A
- JP 11029679 A